# EUROPEAN PATENT APPLICATION

(11) **EP 4 586 388 A2**
(43) Date of publication of application: **16.07.2025**
(21) Application number: 25179963.1
(22) Date of filing: 18.12.2018
(51) Int. Cl.: H01M 50/46

(54) **SEPARATOR WITH A CERAMIC-COMPRISING SEPARATOR LAYER**

(30) Priority: 22.12.2017 US 201762609796 P
(62) Divisional of application: 18892173.8
(71) Applicant: Sila Nanotechnologies Inc., Alameda, California 94501 (US)
(72) Inventor: YUSHIN, Gleb, Alameda 94501 (US); ROUDEBUSH, John, Alameda 94501 (US); KULINSKI, Kyle, Alameda 94501 (US)
(74) Representative: ip21 Ltd

(57) **Abstract**

A battery cell assembly, comprises a first electrode;
a second electrode; and a separator between the first electrode and the second electrode; wherein: the separator comprises a first layer comprising metal oxide, metal hydroxide, or metal oxyhydroxide particles, the first layer being directly deposited on the first electrode; a thickness of the separator ranges between about 0.5 µm to about 10 µm; the metal oxide, the metal hydroxide, or the metal oxyhydroxide particles comprise a (1) a first set of the metal oxide, the metal hydroxide, or the metal oxyhydroxide particles with a first aspect ratio distribution, and (2) a second set of the metal oxide, the metal hydroxide, or the metal oxyhydroxide particles with a second aspect ratio distribution; the metal oxide, the metal hydroxide, or the metal oxyhydroxide particles of the first set are fiber-shaped and are characterized by diameters in a diameter range from around 3 nm to around 2 µm and aspect ratios in an aspect ratio range from around 4 to around 1,000,000; and the metal oxide, the metal hydroxide, or the metal oxyhydroxide particles of the second set are flakes.

## Description

### Claim of Priority under 35 U.S.C. § 119

The present application for patent claims the benefit of U.S. Provisional Application No. 62/609,796, entitled "Reliable Energy Storage Devices with Flexible Ceramic Layer Separating Electrodes," filed December 22, 2017, which is expressly incorporated herein by reference in its entirety.

### BACKGROUND

### Field

Embodiments of the present disclosure relates generally to the design and fabrication of separators with a ceramic-comprising separator layer and their use in electrochemical energy storage devices and other applications as well as the design and fabrication of improved energy storage devices comprising separators with a ceramic-comprising separator layer.

### Background

Owing in part to their relatively high energy densities, relatively high specific energy, light weight, and potential for long lifetimes, advanced rechargeable batteries and electrochemical capacitors are desirable for a wide range of consumer electronics, electric vehicle, grid storage and other important applications. However, despite the increasing commercial prevalence of these electrochemical energy storage devices, further development is needed, particularly for potential applications in low- or zero-emission, hybrid-electrical or fully-electrical vehicles, consumer electronics, energy-efficient cargo ships and locomotives, aerospace applications, and power grids. In particular, further improvements in safety, energy density, specific energy, power density, specific power, cycle stability and calendar life are desired for various electrochemical capacitors and rechargeable batteries, such as rechargeable metal and metal-ion batteries (such as rechargeable Li and Li-ion batteries, rechargeable Na and Na-ion batteries, rechargeable Mg and Mg-ion batteries, rechargeable K and K-ion batteries, etc.), rechargeable alkaline batteries, rechargeable metal hydride batteries, rechargeable lead acid batteries, other rechargeable aqueous batteries, double layer capacitors, hybrid supercapacitors and other devices. In addition, improvements in energy density, specific energy, power density, specific power, and calendar life are desired for various primary batteries as well as primary and rechargeable batteries operating at either low temperatures (e.g., below -20 °C) or high temperatures (e.g., above 60 °C, such as batteries used in drilling applications or in specialized applications, such as thermal batteries).

Separator membranes for many of these primary and rechargeable electrochemical energy storage devices, such as lithium ion (Li-ion) batteries, various aqueous batteries and electrochemical capacitors, are commonly produced from porous polymeric materials. These membranes need to electrically isolate anode and cathode in a cell to prevent self-discharge, while allowing transport of electrolyte ions between these electrodes. Known examples of polymeric materials used in the fabrication of such membranes include olefins (such as polypropylene or polyethylene), cellulose, aramids, nylon, polytetrafluoroethylene and others. Selection of a polymer for a given membrane application may depend on its electrochemical and chemical stability in contact with both electrodes (anode and cathode) and electrolyte during device fabrication and operation, wetting by the electrolyte of choice, price reasonableness, porosity and pore tortuosity, mechanical properties, thermal properties and other factors. Typical thicknesses of such separator membranes in energy storage devices range from as little as 6 microns to as large as 50 microns. Substantially thinner polymer membranes become unsafe to use, while substantially thicker membranes typically reduce energy density and specific energy as well as power density and specific power of energy storage devices to undesirable levels. Typical porosities of such polymer membranes range from around 30 % to around 50 %, with the most typical being around 40% in the case of separator membranes used in certain conventional Li-ion batteries. While polymer-based separator membranes can be produced in mass quantities and are thin and flexible, they suffer from multiple limitations, such as limited thermal stability, limited strength and toughness (particularly if produced sufficiently thin), poor resistance to dendrite penetration, poor wetting by some electrolytes, limited electrolyte permeability, among others. Such limitations become particularly problematic when energy storage devices are pushed to their limits, such as when such devices require faster charging, better stability at higher temperatures and at higher stresses, longer cycle stability, and longer calendar life, among others.

Accordingly, there remains a need for improved separator membranes and improved electrochemical energy storage devices, where electrodes are electrically separated and ionically coupled. There additionally remains a need for improved materials and improved manufacturing processes.

### SUMMARY

Embodiments disclosed herein address the above stated needs by providing improved batteries, components, and other related materials and manufacturing processes.

As an example, a separator is arranged with a ceramic-comprising separator layer. The ceramic-comprising separator layer comprises porous metal oxide fibers with diameters in the range from around 3 nm to around 2 microns, aspect ratios in the range from around 20 to around 100,000, and a total open pore volume among the porous metal oxide fibers in the range from around 0.01 cm³/g to around 1 cm³/g.

### BRIEF DESCRIPTION OF THE DRAWINGS

The accompanying drawings are presented to aid in the description of embodiments of the disclosure and are provided solely for illustration of the embodiments and not limitation thereof. Unless otherwise stated or implied by context, different hatchings, shadings, and/or fill patterns in the drawings are meant only to draw contrast between different components, elements, features, etc., and are not meant to convey the use of particular materials, colors, or other properties that may be defined outside of the present disclosure for the specific pattern employed.
FIG. 1 illustrates an example (e.g., Li-ion or Na-ion, etc.) battery in which the components, materials, methods, and other techniques described herein, or combinations thereof, may be applied according to various embodiments.
FIG. 2 illustrates an example ceramic separator produced from Al₂O₃ nanofibers.
FIG. 3 is a cross-sectional scanning electron microscopy (SEM) image illustrating various aspects of a ceramic separator produced from small Al₂O₃ fibers.
FIG. 4 illustrates an example of a small Al₂O₃ fiber separator layer coating deposited directly on a portion of a Si-based Li-ion battery anode on a copper foil current collector. The separator coating was deposited from a dispersion of small Al₂O₃ fibers.
FIG. 5 illustrates performance of four full cells with a high voltage LCO cathode and a Si-based Li-ion battery anode built either with a small Al₂O₃ fiber separator layer (of two thicknesses) coated directly on a Si anode (thickSSAnode and thinSSAnode) vs. similar (control) cells produced using a regular commercial polymer (PP) separator (control 4 and control 5). All cells have been built with identical anodes and cathodes. Capacity (mAh/g) is normalized by the weight of the anode coating. Mid-cycle hysteresis (V) is recorded when cells were cycled at a C/2 rate.
FIG. 6 and 7A-7B illustrate separator membranes comprising small oxide fibers produced according to embodiments of the disclosure.
FIG. 8A-8J illustrate several example schematics for several types of small fiber-comprising membranes produced according to embodiments of the disclosure.
FIG. 9 illustrate example ceramic platelets that may be used in a separator layer coating according to an embodiment of the disclosure.

### DETAILED DESCRIPTION

Aspects of the present invention are disclosed in the following description and related drawings directed to specific embodiments of the invention. The term "embodiments of the invention" does not require that all embodiments of the invention include the discussed feature, advantage, process, or mode of operation, and alternate embodiments may be devised without departing from the scope of the invention. Additionally, well-known elements of the invention may not be described in detail or may be omitted so as not to obscure other, more relevant details. Further, the terminology of "at least partially" is intended for interpretation as "partially, substantially or completely".

Any numerical range described herein with respect to any embodiment of the present invention is intended not only to define the upper and lower bounds of the associated numerical range, but also as an implicit disclosure of each discrete value within that range in units or increments that are consistent with the level of precision by which the upper and lower bounds are characterized. For example, a numerical distance range from 7 nm to 20 nm (i.e., a level of precision in units or increments of ones) encompasses (in nm) a set of [7, 8, 9, 10, ..., 19, 20], as if the intervening numbers 8 through 19 in units or increments of ones were expressly disclosed. In another example, a numerical percentage range from 30.92% to 47.44% (i.e., a level of precision in units or increments of hundredths) encompasses (in %) a set of [30.92, 30.93, 30.94, ..., 47.43, 47.44], as if the intervening numbers between 30.92 and 47.44 in units or increments of hundredths were expressly disclosed. Hence, any of the intervening numbers encompassed by any disclosed numerical range are intended to be interpreted as if those intervening numbers had been disclosed expressly, and any such intervening number may thereby constitute its own upper and/or lower bound of a sub-range that falls inside of the broader range. Each sub-range (e.g., each range that includes at least one intervening number from the broader range as an upper and/or lower bound) is thereby intended to be interpreted as being implicitly disclosed by virtue of the express disclosure of the broader range.

While the description of one or more embodiments below may describe certain examples in the context of aluminum- (Al-) or oxygen- (O-) comprising small (nano)wires, whiskers, (nano)fibers, (nano)ribbons, other elongated particles as well as flakes (which may alternatively be referred to as "platelets"), (nano)sheets, other planar-shaped particles, including various porous elongated particles or porous planar particles, it will be appreciated that various aspects may be applicable to other compositions (such as other metal oxides as well as metal oxyfluorides, metal fluorides, metal oxynitrides, metal oxyhydroxides (e.g., clays and other oxyhydroxides), metal nitrides, metal oxynitrides, metal carbides, metal oxycarbides, and various other ceramic elongated particles that comprise metal compositions). Examples of suitable metal (or semimetal) atoms for such compositions may include (but not limited to) at least one of the following (depending on the particular application) or their combination: Al, Si, Ti, Li, Cu, Fe, Mg, Na, K, Cs, Ba, Be, C, Zn, Cr, Zr, Y, La, Ce, Sm, Mo, Nb, Ta, W, Ag, Ag, Pt, to name a few.

While the description of one or more embodiments below may describe certain examples in the context of small (nano)wires, whiskers, (nano)fibers, (nano)ribbons, other elongated particles as well as flakes, (nano)sheets, other planar-shaped particles, including various porous elongated particles or porous planar particles that comprise a single metal (for example, aluminum) in their composition, it will be appreciated that various aspects may be applicable to compositions that comprise two, three or more metals.

While the description of one or more embodiments below may describe certain examples in the context of certain types of particles (e.g., (nano)fibers or flakes), it will be appreciated that various aspects may be applicable to compositions that comprise particles of different shapes (e.g., a combination of fiber-shaped particles and flake-shaped particles) and may exhibit different compositions, microstructures or sizes.

While the description of one or more embodiments below may describe certain examples in the context of pure metal oxides, it will be appreciated that various aspects may be applicable to compositions that may comprise both oxide and some fraction of oxide adjacent species such as hydroxides (where hydrogen atoms are bonded to oxygen atoms), suboxides (where oxygen atoms are bonded to oxygen atoms), carboxylate (where metal atoms are bonded to carbonate groups), hydride (where metal atoms are bonded to hydrogen), nitride (where metal atoms are bonded to nitrogen), fluorides (where metal atoms are bonded to fluorine), among many others. As such, the coordination number for metal atoms in such compositions may vary from that of the pure oxides.

While the description of one or more embodiments below may describe certain examples in the context of pure alkoxides, it will be appreciated that various aspects may be applicable to compositions that may contain both alkoxide and some fraction of alkoxide adjacent species, such as hydroxides (containing hydrogen bonded to an oxo group), suboxides (containing oxygen bonded to oxo group), carboxylate (oxo group bonded to carbonate groups), nitride (oxo group bonded to nitrogen), among many others. As such, the coordination number for metal atoms in such compositions may vary from that of the pure alkoxides and the ratio of the alcohol groups (-ROH) to metal atoms may vary from that of the pure alkoxides. For example, in case of aluminum ethoxide compositions the aluminum (Al) atoms may not be 6-coordinated (as expected for pure Al(EtOH)₃), but may, for example, comprise 6-coordinated, 5-coordinated and 4-coordinated Al. Similarly, the molar ratio of ethoxide groups (-EtOH) to Al atoms may not be 3 (as expected for pure Al(EtOH)₃), but may, for example, range from as high as around 10 to as low as around 0.1.

In the context of one or more embodiments of the present description, the term "bulk" (as in "bulk small fibers", "bulk small particles", "bulk small flakes", etc.) refers to a sample where particles (such as small fibers, small flakes and other small particles, etc.) are stuck together by chemical, electrostatic, and/or physical mechanisms so as to form large agglomerates (such agglomerates having average dimensions in the range from about 1 µm to about 10 cm).

In the context of one or more embodiments of the present description, the term "aspect ratio" refers to the ratio of the longest dimension to the shortest dimension of a material or a particle.

In the context of one or more embodiments of the present description, the term "dispersion" refers to a mixture of solid(s) and liquid(s) whereas the solid(s) interact(s) with the liquid(s) in a way which changes the fluid properties of both the solid(s) and liquid(s). For example, solid (nano)particles of various shapes and sizes may be dispersed in a liquid causing the viscosity of the liquid to increase and the Brownian motion of the particles to increase. The term "dispersion" may further refer to the condition when solid (nano)particles of various shapes and sizes are being suspended in a liquid (solvent). The term "stable dispersion" refers to the conditions when particles (such as fibers, flakes, nanoparticles or particles of various other shapes and sizes) remain suspended for a timescale that is sufficient for a given processing stage (such as casting the dispersion into a film on a substrate, etc.).

While the description of one or more embodiments below may also describe certain examples in the context of the formation and applications of certain oxides of metal(s) (of dense or porous particles of various shapes, including but not limited to fiber-shapes and flake shapes), it will be appreciated that various aspects of the present disclosure may be applicable to the formation of other ceramic materials (not necessarily oxides) as well as various ceramic-ceramic, ceramic-glass, ceramic-metal, ceramic-carbon, ceramic-polymer, glass-polymer, glass-ceramic-polymer, polymer-polymer and other composites.

While the description of one or more embodiments below may also describe certain examples in the context of the formation and applications of porous membranes for electrochemical energy storage or energy conversion devices, it will be appreciated that various aspects of the present disclosure (such as formation of membranes, among others) may be applicable to a broad range of other applications, such as various composites, biomedical and medical applications, sensors (including, but not limited to, moisture sensors), air and liquid membrane purification (including, but not limited to, filtrating or purifying various gases or liquids from small particles (e.g., as in HEPA-filtration), bacteria, bacteria spores, viruses, harmful organics, etc.), structural materials and devices, optical devices, electrical or thermal insulation, among others.

For simplicity and illustration purposes, all elongated particles (such as dense and porous nanofibers and fibers, nanowires, whiskers, nanotubes, nanoribbons, etc.) of suitable size, shape, aspect ratios, density, porosity, crystal structure, and morphology may be generally referred to herein as "small fibers." In one or more embodiments of the present disclosure, the suitable diameter (or width) of individual small fibers (of various compositions) may range from around 2 nm to around 1 micron and the suitable length of individual small fibers (of various compositions) may range from around 50.0 nm to around 500.0 mm. In one or more embodiments of the present disclosure, the suitable aspect ratio (width-to-length) of individual small fibers (of various compositions) may range from around 1:4 to around 1:1,000,000.

For simplicity and illustration purposes, all planar particles of suitable size, shape, aspect ratios, density, porosity, crystal structure, and morphology may be generally referred to herein as "small flakes." In one or more embodiments of the present disclosure, the suitable thickness of individual small flakes (of various compositions) may range from around 0.3 nm to around 0.6 micron and the suitable average width of individual small flakes may range from around 50 nm to around 5 mm. In one or more embodiments of the present disclosure, the suitable aspect ratio (width-to-length) of individual small flakes (of various compositions) may range from around 1:4 to around 1:1,000,000.

For simplicity and illustration purposes, all particles with a volume below around 0.2 micron³ may be generally referred to herein as "nanoparticles."

Depending on the application, in an example, the suitable true density (taking into consideration closed porosity) of small fibers, small flakes and nanoparticles may range from around 0.3 to around 4 g/cm³ (e.g., for particles comprising only Al metal in their composition) and to around 6 g/cm³ (e.g., for particles comprising metals other than Al in their composition) in the context of one or more embodiments of the present description. Depending on the application and the processing conditions, in an example, the suitable pore volume (e.g., total open pore volume) among individual small fibers, small flakes and nanoparticles (e.g., including pore space in the fibers / flakes / nanoparticles themselves, such as surface pores, plus any intervening open pore space between the fibers / flakes / nanoparticles when deployed in the ceramic-comprising separator layer) may range from around 0 to around 5 cm³/g (e.g., in some designs, from around 0.01 cm³/g to around 1 cm³/g). Depending on the application and the processing conditions, in an example, the microstructure may range from amorphous to nanocrystalline to polycrystalline to single crystalline to a mixture of those to other types. Depending on the application and processing conditions, in an example, the suitable surface roughness of the small fibers and small flakes may range from around 0 to around 100 nm.

Certain conventional polymer separator membranes used in Li-ion, Na-ion and other rechargeable and primary batteries as well as in electrochemical capacitors (e.g., double layer capacitors, pseudocapacitors or hybrid devices) and selected types of fuel cells suffer from limited mechanical strength and low thermal stability, which may lead to thermal runaway and cell explosions when such polymer separator membranes fail. Reducing a thickness of the polymer separator membranes is advantageous for increasing energy and power density of these energy storage devices in some applications, but is conventionally not feasible because reduction in thickness of the of the polymer separator membranes may reduce mechanical properties to a level where cell operation may become unsafe due to an unacceptably high chance of separator failure during cell operation. Certain conventional polymer separator membranes may additionally suffer from limited wetting by electrolytes and limited permeability by electrolyte ions, which limits charging rate and power properties of electrochemical energy storage devices.

Ceramic materials are known to exhibit better strength, better wetting and better thermal properties compared to polymers, but are typically too brittle for use as separator membranes. However, when ceramic materials are processed into various fibers (particularly small fibers), the fibrous ceramic materials may become sufficiently flexible to be used as separator membranes in accordance with one or more embodiments. In addition, in some designs, reducing the diameter of the ceramic fibers may increase the specific strength and toughness and other mechanical properties of the fibers (when normalized by mass or cross-sectional area of the fibers). As such, formation of flexible, strong and thermally stable ceramic separators from small ceramic fibers (and other materials) may overcome one or more limitations of conventional polymer separators. However, economical formation of high-performance ceramic separators is challenging. One or more embodiments of the present disclosure are directed to suitable fabrication methods, suitable morphologies and suitable compositions of ceramic-comprising (or pure ceramic) separator layers (e.g., standalone separator membranes that are independent of the electrodes or separator coatings that are coated directly onto the electrodes and/or to a separator membrane) for metal-ion batteries based on Li-ion, Na-ion, K-ion, Ca-ion, Zn-ion, Cu-ion, Mg-ion, and other rechargeable and primary batteries (including thermal batteries) and electrochemical capacitors (including double layer capacitors).

Due to a broad adoption and popularity of metal-ion batteries (such as Li-ion batteries), for brevity and convenience the description below may describe certain examples in the context of Li and Li-ion batteries. However, it will be readily appreciated that the various embodiments described below may be applied to other metal-ion battery types.

In some designs, it may be advantageous for the separator membranes (or separator membrane layers) that comprise ceramic fibers (including small ceramic fibers) to exhibit pore volume in the range from around 0.02 cm³/g to around 6.00 cm³/g (most commonly from around 0.2 to around 1.5 cm³/g). For example, too small pore volume may not provide enough permeability, while too large pore volume may reduce mechanical strength of the membranes to below the desirable level for some applications (e.g., Li-ion and other rechargeable batteries).

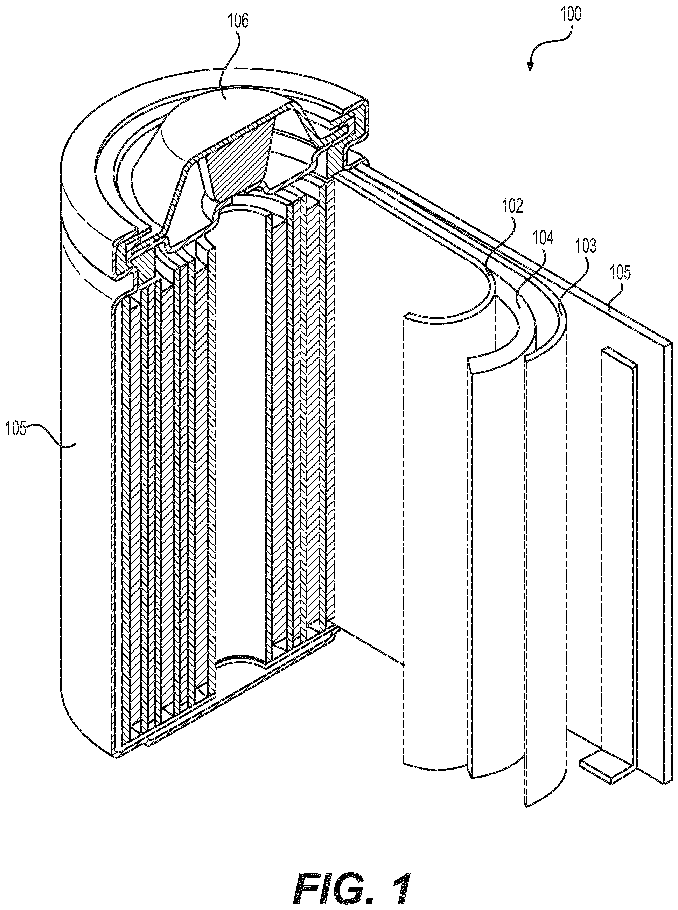

FIG. 1 illustrates an example metal-ion (e.g., Li-ion) battery in which the components, materials, methods, and other techniques described herein, or combinations thereof, may be applied according to various embodiments. A cylindrical battery is shown here for illustration purposes, but other types of arrangements, including prismatic or pouch (laminate-type) or flexible or coin-type batteries, may also be used as desired. The example battery 100 includes a negative anode 102, a positive cathode 103, a separator 104 interposed between the anode 102 and the cathode 103, an electrolyte (not shown) impregnating the separator 104, a battery case 105, and a sealing member 106 sealing the battery case 105.

Both liquid and solid electrolytes may be used for some or all of the designs described herein. In an example, certain electrolytes for Li- or Na-based batteries of this type may comprise a single Li or Na salt (such as LiPF₆ for Li-ion batteries and NaPF₆ or NaClO₄ salts for Na-ion batteries) in a mixture of organic solvents (such as a mixture of carbonates). Other common organic solvents include nitriles, esters, sulfones, sulfoxides, phosphorous-based solvents, silicon-based solvents, ethers, and others. Such solvents may be modified (e.g., be sulfonated or fluorinated). The electrolytes may also comprise ionic liquids (in some designs, neutral ionic liquids; in other designs, acidic and basic ionic liquids). In some designs, the suitable electrolytes may comprise or be based on molten salts (in some designs, such electrolytes may be melt-infiltrated into the electrodes and/or ceramic-based separator membrane or coating). In some designs, suitable electrolytes may include solid state glass or ceramic electrolytes that exhibit a melting point below that of the ceramic membrane (or layer) and have low solubility for the membrane material at the melt infiltration temperature (e.g., about 0-5 vol. % solubility of the membrane material(s)). In some designs, a solid-state electrolyte may be dissolved in a solvent and infiltrated into the ceramic separator and formed by calcination (e.g., by using common sol-gel processing techniques).

The electrolytes may also comprise mixtures of various salts (e.g., mixtures of several Li salts or mixtures of Li and non-Li salts for rechargeable Li and Li-ion batteries).

A common salt used in a Li-ion battery electrolyte, for example, is LiPF₆, while less common salts include lithium tetrafluoroborate (LiBF₄), lithium perchlorate (LiClO₄), lithium bis(oxalate)borate (LiB(C₂O₄)₂, lithium difluoro(oxalate)borate (LiBF₂(C₂O₄)), various lithium imides (such as SO₂FN⁻(Li⁺)SO₂F, CF₃SO₂N⁻(Li⁺)SO₂CF₃, CF₃CF₂SO₂N⁻(Li⁺)SO₂CF₃, CF₃CF₂SO₂N⁻(Li⁺)SO₂CF₂CF₃, CF₃SO₂N⁻(Li⁺)SO₂CF₂OCF₃, CF₃OCF₂SO₂N⁻(Li⁺)SO₂CF₂OCF₃, C₆F₅SO₂N⁻(Li⁺)SO₂CF₃, C₆F₅SO₂N⁻(Li⁺)SO₂C₆F₅ or CF₃SO₂N⁻(Li⁺)SO₂PhCF₃, and others), and others. Electrolytes for Na-ion, Mg-ion, K-ion, Ca-ion, Cu-ion, Zn-ion and other metal ion batteries may often be more exotic as these batteries are in earlier stages of development. For example, such exotic electrolytes may comprise different salts and solvents (in some cases, ionic liquids or molten salts may replace organic solvents for certain applications).

Conventional electrodes utilized in Li-ion batteries may be produced by (i) formation of a slurry comprising active materials, conductive additives, binder solutions and, in some cases, surfactant or other functional additives; (ii) casting the slurry onto a metal foil (e.g., Cu foil for most anodes and Al foil for most cathodes); and (iii) drying the casted electrodes to completely evaporate the solvent.

Conventional cathode materials utilized in Li-ion batteries may be of an intercalation-type, whereby metal ions are intercalated into and occupy the interstitial positions of such materials during the charge or discharge of a battery. Such cathodes experience very small volume changes when used in electrodes. Such conventional cathode materials also typically exhibit high density (e.g., 3.8 - 6 g/cm³, at the active material level) and are relatively easy to mix in slurries. However, such cathodes exhibit relatively small gravimetric and volumetric capacities (e.g., less than around 220 mAh/g and less than around 800 mAh/cm³, respectively).

*Conversion*-type cathode materials for rechargeable Li-ion or Li batteries may offer higher energy density, higher specific energy, or higher specific or volumetric capacities compared to intercalation-type cathode materials. For example, fluoride-based cathodes may offer outstanding technological potential due to their very high capacities, in some cases exceeding 300 mAh/g (greater than 1200 mAh/cm³ at the electrode level). For example, in a Li-free state, FeF₃ offers a theoretical specific capacity of 712 mAh/g; FeF₂ offers a theoretical specific capacity of 571 mAh/g; MnF₃ offers a theoretical specific capacity of 719 mAh/g; CuF₂ offers a theoretical specific capacity of 528 mAh/g; NiF₂ offers a theoretical specific capacity of 554 mAh/g; PbF₂ offers a theoretical specific capacity of 219 mAh/g; BiF₃ offers a theoretical specific capacity of 302 mAh/g; BiF₅ offers a theoretical specific capacity of 441 mAh/g; SnF₂ offers a theoretical specific capacity of 342 mAh/g; SnF₄ offers a theoretical specific capacity of 551 mAh/g; SbF₃ offers a theoretical specific capacity of 450 mAh/g; SbF₅ offers a theoretical specific capacity of 618 mAh/g; CdF₂ offers a theoretical specific capacity of 356 mAh/g; and ZnF₂ offers a theoretical specific capacity of 519 mAh/g. Mixtures (for example, in the form of alloys) of fluorides may offer a theoretical capacity approximately calculated according to the rule of mixtures. The use of mixed metal fluorides may sometimes be advantageous (e.g., may offer higher rates, lower resistance, higher practical capacity, or longer stability). In a fully lithiated state, metal fluorides convert to a composite comprising a mixture of metal and LiF clusters (or nanoparticles). Examples of the overall reversible reactions of the conversion-type metal fluoride cathodes may include 2Li+CuF₂↔2LiF+Cu for CuF₂-based cathodes or 3Li+FeF₃↔3LiF+Fe for FeF₃-based cathodes). It will be appreciated that metal fluoride-based cathodes may be prepared in both Li-free or partially lithiated or fully lithiated states. Another example of a promising conversion-type cathode (or, in some cases, anode) material is sulfur (S) (in a Li-free state) or lithium sulfide (Li₂S, in a fully lithiated state). In order to reduce dissolution of active material during cycling, to improve electrical conductivity, or to improve mechanical stability of S/Li₂S electrodes, one may utilize formation of porous S, Li₂S, porous S-C composites, Li₂S-C composites, porous S-polymer composites, or other composites comprising S or Li₂S, or both.

Unfortunately, many conversion-type cathodes used in Li-ion batteries suffer from various performance limitations in conventional cell designs. For example, such electrodes may change volume during cycling, inducing stresses within a separator, which may eventually fail, particularly if the separator is made of a polymer (which becomes even more problematic if the cell is operated at elevated temperatures). As such, the use of a more robust ceramic separator layer (e.g., a standalone separator membrane or separator coating) may be particularly advantageous in cells comprising conversion-type cathodes. In another example, such cathodes may start leaching some ions that may travel through the separator to the anode, where they may induce damage in the solid electrolyte interphase (SEI) layer, which can lead to capacity fading and resistance growth. Polymer separators typically fail to capture such ions, thereby allowing cell to fail. The use of ceramic separators may be advantageous because their polar nature may lead to adsorption of such ions, thereby improving cell stability. In yet another example, dissolution of some portion of the conversion-type cathode may induce re-precipitation of the dissolution products (e.g., polysulfides in case of S-comprising cathodes) at the electrode-polymer separator interface, blocking ion transport. In contrast, ceramic separators may either reduce formation of some of the most soluble species (e.g., longer chain polysulfides in case of S-comprising cathodes) or adsorb them into their internal surface or break them into less soluble species. In this regard, the use of ceramic separators with high specific surface area and high porosity (e.g., in the range from around 20.0 vol. % to around 95.0 vol. %, in some designs from around 30.0 vol. % to around 85.0 vol. %) may be particularly advantageous. In yet another example, conversion-type active material may require cell operation at elevated temperatures (e.g., between about 30°C to about 300 °C; for example, in order to improve charge or discharge kinetics, etc.) where polymer separators may fail. In contrast, ceramic separators may operate effectively at such elevated temperatures.

Conventional anode materials utilized in Li-ion batteries may also be of an *intercalation-*type, whereby metal ions are intercalated into and occupy the interstitial positions of such materials during the charge or discharge of a battery. Such anodes experience very small volume changes when used in electrodes. However, such anodes exhibit relatively small gravimetric and volumetric capacities (e.g., less than 370 mAh/g rechargeable specific capacity in the case of graphite- or hard carbon-based anodes and less than 600 mAh/cm³ rechargeable volumetric capacity). *Alloying*-type anode materials for use in Li-ion batteries offer higher gravimetric and volumetric capacities compared to intercalation-type anodes. For example, silicon (Si) offers approximately 10 times higher gravimetric capacity and approximately 3 times higher volumetric capacity compared to an intercalation-type graphite (or graphite-like) anode. As such, in some designs it may be advantageous to utilize anodes that comprise from around 2 wt. % to around 80 wt. % Si in their composition (e.g., in some designs, anodes comprising Si in the range from around 3 wt. % to around 70 wt. % may be used). In addition to Si-comprising anodes (including various Si-comprising composites and nanocomposites), other common examples of anodes comprising *alloying*-type active materials include, but are not limited to, those that comprise germanium, antimony, aluminum, magnesium, zinc, gallium, arsenic, phosphorous, silver, cadmium, indium, tin, lead, bismuth, their alloys, and others. In addition to anodes comprising alloying-type active materials, other interesting types of high capacity anodes may comprise conversion-type anode materials such as metal oxides (including silicon oxide, lithium oxide, etc.), metal nitrides, metal phosphides (including lithium phosphide), metal hydrides, and others.

Unfortunately, many alloying-type or conversion-type anodes used in Li-ion batteries suffer from various performance limitations in conventional cell designs. For example, such anodes may change volume during cycling, inducing stresses within a separator, which may eventually fail, particularly if the separator is made of a polymer (which becomes even more problematic if the cell is operated at elevated temperatures). The use of a more robust ceramic (or ceramic-comprising) separator layer (e.g., a standalone separator membrane or separator coating) as described herein may be particularly advantageous in cells comprising alloying-type or conversion-type anodes. In some designs, alloying-type or conversion-type anodes are used in Li-ion batteries that are designed to achieve faster charging because their smaller thickness (compared to graphite) allows cell to withstand higher charging currents without failure. Unfortunately, conventional polymer membranes may substantially resist fast charging and may induce undesirably high voltage drop in a cell, leading to the anode or cathode potential exceeding the safe limits. In some designs, the use of ceramic (or ceramic-comprising) separator layer (e.g., a standalone separator membrane or separator coating) as described herein instead of the polymer membranes may allow faster ion transport (e.g., a smaller voltage drop) and thus may be particularly advantageous for use in such cells (particularly for cells designed for charging in less than about 30-40 min from a discharged state (or about 0-10% of their full capacity) to about 80-90% of their full capacity, including cells comprising high capacity alloying-type or conversion-type anode materials). In some designs, the use of a thin (e.g., from around 0.5 micron to around 10 micron) ceramic separator layer (e.g., a standalone separator membrane or separator coating) with high (e.g., about 40-90 %) internal porosity is advantageous for fast-charging cells (cells designed or capable for charging in less than about 30-40 min (and even more so in less than 20 min) from a discharged state (or about 0% of their full capacity) to about 80% of their full capacity).

In some designs, alloying-type or conversion-type anodes (and/or conversion-type cathodes) are used in Li-ion batteries that are designed to achieve the highest possible specific energy or high energy density. Unfortunately, conventional polymer membranes are typically rather thick (e.g., because thinner polymer membranes may become unsafe) and may limit attainable energy storage characteristics. In some designs, the use of thin (e.g., from around 0.5 micron to around 10 micron) yet safe ceramic separator layer (e.g., a standalone separator membrane or separator coating as described herein) instead of the polymer membranes may result in higher energy storage characteristics and thus may be particularly advantageous for use in such high specific energy or high energy density cells. In some designs, the use of separator layers (e.g., standalone separator membranes or separator coatings) is particularly advantageous in cells with specific energy exceeding about 270 Wh/kg (e.g., and even more so for cells with specific energy exceeding about 350-400 Wh/kg) or in cells with energy density exceeding about 650 Wh/L (e.g., and even more so for cells with energy density exceeding about 750-850 Wh/L). Because energy-dense cells may also release more energy internally during a self-discharge event in some designs, the use of more thermally and mechanically stable ceramic separator layers (e.g., standalone separator membranes or separator coatings) may also be advantageous from an improved safety point of view.

Overall, high power, fast charging or high energy cells (including cells comprising conversion or alloying-type anodes or conversion-type cathodes) may benefit when a ceramic separator membrane (or a ceramic separator layer) is used in their construction in some designs.

In addition, in some designs, specialized cell(s) operating at elevated temperatures (e.g., operating at least a portion of their operating (charging or discharging) time (e.g., from around 0.1% to around 100 %) at temperatures from around 70°C to around 500 °C) may benefit from comprising a thin (and, in some cases, flexible), thermally more stable and porous ceramic (or ceramic-comprising) separator layer (e.g., a standalone separator membrane or separator coating), particularly those comprising small ceramic fibers or small ceramic flakes, as described herein.

In some designs, suitable electrically isolative ceramic separator membranes for energy storage devices (such as Li-ion and Na-ion batteries, high temperature batteries, primary batteries, electrochemical capacitors, among many others) may be produced from small fibers of suitable size and aspect ratios. In some designs, small ceramic flakes may be used instead of or in addition to small ceramic fibers (e.g., to provide more robust electrical separation between the electrodes or to enhance separator mechanical properties since flakes may exhibit larger contact area with fibers than fibers do with other fibers in case of randomly arranged fibers, which may allow for stronger bonding). In some designs, nanoparticles may be used in addition to small ceramic flakes and/or small ceramic fibers. Note that, in some designs, if flakes are oriented parallel to the plane of the separator layer, their presence may increase separator pore tortuosity, and thus slow down the ion transport rate in the separator of a given thickness. This is one reason why it may be advantageous for the flake-shaped particles not to take more than around 90.0 wt.% of the final layer composition (in some designs, preferably not more than 50.0 wt. %) and more than around 40.0 % of the total separator layer volume (in some designs, preferably, no more than around 20.0 vol.%). In some designs, it may similarly be advantageous to use smaller size of the flakes (e.g., those with lateral dimensions in the range from around 10 nm to around 10 micron). Overall, the use of the flake-shaped particles may be highly advantageous in terms of ability of the strained and stressed separator layer to prevent fracturing and/or forming internal shorts during the cell operation, although somewhat counterintuitive to people in the field. In some designs, it may be advantageous for small ceramic flakes to comprise pores (or channels) for enhanced ion transport. In some designs, such pores may be oriented substantially perpendicular to the flat area of the flake. In some designs, characteristic dimensions of the pores (e.g., width in case of slit-shaped pores or diameter in case of cylindrical pores) may range from around 0.5 nm to around 500 nm. In some designs, smaller pores (e.g., below a first characteristic dimension threshold) may not provide sufficiently fast ion transport, while larger pores (e.g., above the first characteristic dimension threshold or a second characteristic dimension threshold that is higher than the first characteristic dimension threshold) may not provide sufficient electrical separation between the anode and cathode within a cell. In some designs, it may be advantageous for the small ceramic fibers to comprise pores (e.g., open pores or surface pores).

In some designs, it may be advantageous to combine small fibers of different sizes in the membrane (e.g., have different subsets of the small fibers with average diameters that vary by about 10-100 times or having length of small fibers vary by about 10-1000,000 times) in order to achieve a combination of good mechanical properties, good transport properties and good and reliable separation. In some designs, small fibers may be combined with larger fibers (e.g., fibers with diameter larger than around 1 micron or length larger than around 100 micron) in order to achieve a good combination of mechanical and transport properties in a membrane. In some designs, it may be advantageous to utilize from around 10 wt.% to around 100 wt. % of the ceramic fibers with the diameter in the range from around 10 nm to around 200 nm.. In some designs, it may be advantageous to utilize from around 20 wt. % to around 100 wt. % of the ceramic fibers with the diameter in the range from around 20 nm to around 200 nm. In some designs, it may be advantageous to utilize from around 10 wt.% to around 100 wt. % of the ceramic fibers with the length in the range from around 1 micron to around 500 micron. In some designs, it may be advantageous to utilize from around 20 wt.% to around 100 wt. % of the ceramic fibers with the length in the range from around 2 micron to around 200 micron. In some designs, the above-described desired variations in fiber size may also be calculated when comparing the average diameter of the thinnest 10 % and the average diameter of the thickest 2 % of the fibers or when comparing the average length of the shortest 10 % and the average length of the longest 2 % of the fibers.

In some designs, it may be advantageous to combine small flakes of different sizes in the membrane (e.g., have small flakes with thickness that vary by about 3-30 times or having lateral dimensions of small flakes vary by about 3-300 times) in order to achieve a combination of good mechanical properties, good transport properties and good and reliable separation. In some designs, small flakes may be combined with larger flakes in order to achieve a good combination of mechanical and transport properties in a membrane. In some designs, porous flakes may be combined with nonporous flakes (e.g., for similar reasons). In some designs, it may be advantageous to combine one or two or more types flakes of different sizes (or different composition, porosity or surface chemistry) and one or two or more types fibers of different sizes (or different composition, porosity or surface chemistry) in a separator layer in order to achieve most favorable performance characteristics (mechanical properties and ion transport rate).

In some designs, the use of oxide (e.g., comprising of aluminum oxide or aluminum lithium oxide, magnesium oxide, aluminum magnesium oxide, aluminum magnesium lithium oxide, zirconium oxide, among other compositions) small fibers or small flakes for the formation of a ceramic separator layer (e.g., a standalone separator membrane or separator coating) may be particularly advantageous in case of Na-ion or Li-ion batteries (as well as other types of batteries and electrochemical capacitors) with organic, polymer, ionic liquid or molten salt (or melt-infiltrated solid) electrolytes. In some designs, the advantages of using oxide fibers (particularly small fibers) with aspect ratios in the range from around 4-10 to around 1,000,000 over "regular" oxide particles with aspect ratios in the range from around 1 to around 2-4) in the ceramic separator layer (e.g., a standalone separator membrane or separator coating) may include high fiber flexibility, high fiber strength, high fiber toughness, the ability to achieve very high porosity upon random packing of the fibers (e.g., over about 70%, which may be important for high permeability), stronger interactions (e.g., via larger area bonding or entanglement) possible between the fibers (compared to that between low aspect ratio particles), enhanced robustness (or resistance to crack formation or propagation) in case of electrode thickness changes, enhanced robustness (or resistance to crack formation or propagation) in case of some areal expansion of the electrode (e.g., within about 0.1-20%), the ability to achieve a smaller pore size (e.g., which may be important for the prevention of potential Li dendrite penetration or internal short upon electrical contact of the anode and cathode) and the ability to prepare thin porous separator layers (e.g., standalone separator membranes or separator coatings) with low surface roughness and low fraction of defects. In some designs, advantages of using porous small ceramic fibers (e.g., a porosity from around 0.05 vol. % up to around 90 vol. %, preferably from around 5 vol. % to around 40 vol. %) over dense small ceramic fibers (and porous small flakes over dense small flakes) is higher porosity (and thus higher permeation) for the same particle packing density. In addition, porous small fibers (and in some cases small flakes) may pack less densely compared with regular wires due to their higher surface roughness and lower density, which further increases separator layer (e.g., a standalone separator membrane or separator coating) permeation. Furthermore, porous ceramic fibers or flakes (even when filled with electrolyte) are lighter than dense (e.g., substantially non-porous) ceramic fibers or flakes, which is advantageous from the point of increasing gravimetric energy density of the cells. In addition, porous ceramic fibers or flakes may offer higher surface area (e.g., if needed to neutralize some side-reaction products) and may be filled with functional (nano)particles or coatings. Advantages of using small ceramic fibers (and small ceramic flakes) (e.g., fibers with a diameter between around 2 nm to around 1 micron and a length between around 50 nm to around 5 mm or flakes with an average thickness between around 0.3 nm to around 0.6 micron and an average width between around 50 nm to around 5 mm) over large ceramic fibers (and large ceramic flakes) (e.g., fibers with a diameter between around 1 micron to around 20 micron or flakes with an average thickness between around 0.6 micron to around 3 micron) include their higher strength, higher toughness and higher flexibility (e.g., each of which is important for improved mechanical stability during battery cycling), higher level of surface smoothness achievable in the separator layer (e.g., a standalone separator membrane or separator coating) (e.g., important for reduced stress concentration and thus improved mechanical stability during battery cycling), smaller pore size (and thus more robust protection against accidental internal shorts or permeation by small particles), smaller membrane thickness (and thus faster ion transport and higher cell-level energy density), among others.

In some designs, it may be advantageous (e.g., for improved cell stability or increased cell assembling yield, among other advantages) for individual small ceramic (e.g., oxide) fibers (or flakes) in the separator membrane layer to exhibit an average tensile strength in the range from around 50 MPa to around 50 GPa (e.g., in the range from around 100 MPa to around 50 GPa). In some designs, from around 0.5 GPa to around 50 GPa.

In some designs, it may be advantageous for such ceramic-comprising separator layers (e.g., standalone separator membrane or separator coatings) to additionally comprise about 0.1-50 wt. % polymer or about 0.01-50 wt. % of another type of ceramic particles (referred to below as 'secondary' ceramic particles) of various shapes and dimensions or both (e.g., for enhancing mechanical properties or for shutting the cell upon overheating or for improved adhesion or improved electrochemical stability on the anode, etc.). In some designs, the polymer composition or the secondary ceramic particle composition may be located within a distinct separate layer within such a separator layer (e.g., a standalone separator membrane or separator coating). In some designs, the ceramic-based separator layer may be prepared as a standalone membrane, while in other designs the ceramic-based separator layer may be implemented as a coating on at least one of the electrodes (e.g., on the anode or on the cathode or on both) or may be used as both the membrane and the coating for the optimal performance (e.g., most superior reliability). In some designs, the ceramic-based separator layer may be implemented as a coating on one or both sides of a polymer separator membrane (e.g., an aramid separator membrane). In some designs, one electrode may be coated with one type of separator layer (e.g., a polymer separator layer, or a separator layer comprising one type/composition of ceramic material or one size distribution or aspect ratio distribution of ceramic material or one shape of ceramic material, or a separator layer comprising a mixture of one type of a polymer and one type of ceramic material or mixture of ceramic materials, including bonded or porous particles, etc.), while another electrode may be coated with another type of separator layer (e.g., a separator layer comprising another type/composition of ceramic material or mixture of ceramic materials or another size distribution or aspect ratio distribution of ceramic material or another shape of ceramic material, or a separator layer comprising a different polymer/ceramic mixture, etc.), in order to achieve desired performance characteristics. For example, in some designs, performance improvements may be achieved based on the different sizes of particles in the electrodes or based on the different requirements for electrochemical stability in the anode and the cathode or based on the advantages matching or controlling mechanical properties of different layers to reduce or prevent formation of cracks or defects that may lead to cell failure, based on suppression of the different side reactions on the electrodes, and/or based on other reasons.

In some designs, electrodes may be coated with polymer, ceramic or hybrid polymer/ceramic nanoparticles (of various shapes and sizes) in order to level and flatten the electrodes better. In some designs, such a coating may be deposited before an additional coating with a layer comprising small ceramic (e.g., oxide) fibers or small ceramic flakes. As an illustrative example, a self-leveling dispersion (e.g., with a target average thickness of about 3 µm) may be coated onto an electrode with a known thickness of about 80 µm (one side) and a largest particle (or agglomerate) size of around 10 µm to achieve an electrode with less than +/- about 1 µm thickness variation. In some designs, the wet thickness may be adjusted to make sure that any surface imperfections are substantially covered (buffed out) by the separator layer coating.

Depending on the particular application and membrane composition, in some designs a suitable porosity in the separator layer (e.g., a standalone separator membrane or separator coating) may range from around 5 vol. % up to around 99.9 vol. % (more preferably, from around 20.0 vol. % to around 85.0 vol. %), where higher porosities may be desired for thicker separator membranes or for applications requiring faster ion transport.

In some designs, porous and flexible ceramic separator layers (e.g., standalone separator membranes or separator coatings) may comprise small fibers, at least some of which are bonded to each other (e.g., locally sintered or locally attached to each other by chemical (primary) bonds or by using a ceramic or polymer or hybrid ceramic/polymer bonding layer) and/or to other types of particles (e.g., flakes or particles with low aspect ratio). In some designs, such a bonding may include secondary bonds (e.g., hydrogen or van der Waals bonds) in addition to or instead of chemical bonds. While individual hydrogen or van der Waals bonds are significantly weaker (exhibit lower binding energy) than individual chemical bonds, these offer a significant advantage of being able to repair and reform new secondary bonds (after being broken). In contrast, broken chemical bonds are often irreparable or difficult to repair. Larger contact areas between fibers (or flakes or particles of different shapes) that involve hydrogen bonding and high density of secondary bonds may compensate for the lower strength of individual secondary bonds in some designs and, as a result, may form very strong overall bonding between neighboring particles (e.g., fibers, flakes, etc.). In some designs, porous and flexible ceramic separator layers (e.g., standalone separator membranes or separator coatings) may comprise small flakes, at least some of which are bonded to each other (e.g., locally sintered or locally attached to each other by chemical bonds or by using a ceramic or polymer or hybrid ceramic/polymer bonding layer) and/or to other types of particles (e.g., fibers or particles with low aspect ratio). In some designs, such a bonding may include hydrogen or van der Waals bonding in addition to or instead of chemical bonds. In some designs, porous and flexible ceramic separator layers (e.g., standalone separator membranes or separator coatings) may comprise both small flakes or small fibers, at least some of which are bonded to each other (e.g., locally sintered or locally attached to each other by chemical bonds or by using a ceramic or polymer or hybrid ceramic/polymer bonding layer). In some designs, such a bonding may include hydrogen or van der Waals bonding in addition to or instead of chemical bonds. In some designs, porous and flexible ceramic separator layers (e.g., standalone separator membranes or separator coatings) may comprise fibers or flakes of different sizes. In some designs, it may be advantageous that the average bond strength (e.g., average tensile strength) of the bonded area (between the individual fibers or flakes or between particles of different shape) ranges from around 0.01 % to over around 100.0% (e.g., from around 1 % to over around 100%) of the average strength (e.g., average tensile strength) of the individual small fibers (or small flakes). Higher bonding strength is generally advantageous for achieving high strength of the membranes. In some designs, some small fibers (or small flakes) may be used in combination with other (e.g., still small) fibers (or flakes), but those that exhibit substantially larger diameter or thickness (e.g., by 3 to 50 times) or substantially larger length (e.g., by 3 to 1,000 times) or substantially larger aspect ratio (e.g., by 3 to 1,000 times) or substantially different (e.g., by 3 to 1,000 times) elasticity (maximum strain) or stiffness (elastic modulus) or substantially different (e.g., by about 2 to about 1,000 times) bending radius to achieve desired mechanical properties. In some designs, it may be advantageous for the separator membrane layer strength (e.g., in both tensile and compressive tests) to range from around 1.0 MPa to around 2,000.0 MPa (in some designs, from around 10.0 MPa to around 500.0 MPa). Higher strength may help to reduce layer thickness as well as cell manufacturing defects during assembling. In addition, higher strength may improve cell robustness during operation. Good bonding between individual fibers (e.g., small fibers) may help to achieve such strength values.

In some designs, small fibers (or small flakes) may be used in combination with large fibers (e.g., fibers with a diameter larger than around 1 micron, but smaller than around 10 micron) or large flakes (e.g., flakes with an average thickness in excess of around 0.6 micron be less than around 3 micron) in order to improve membrane properties or manufacturability. In some designs, at least some of the small fibers (or small flakes) are bonded to large fibers (or large flakes). Such an arrangement may allow enhanced mechanical stability in some designs. In some designs, the fibers may be entangled. In some designs, the aspect ratio of at least some portion of the fibers (e.g., about 0.1-100%) may exceed 100. In some designs, the length of at least some of the fibers (e.g., about 0.1-100%) may exceed one or more average linear dimensions (e.g., an average diameter) of the active electrode particles. In some designs, it may be preferable that the length of at least some of the fibers (e.g., about 0.1-100%) exceed the one or more average linear dimensions (e.g., an average diameter) of the active electrode particles by about 2 to about 20,000 times.

In some designs, it may be advantageous to produce and utilize a porous and flexible ceramic separator layer (e.g., standalone separator membranes or separator coatings that comprise small fibers) with a sufficiently low bending radius. Such a parameter may depend on the membrane mechanical properties (e.g., area and strength of bonding between fibers, average fiber length, etc.), porosity, level of fiber entanglements, thickness of the membrane, and the particular requirement may depend on the cell assembling technique, cell size and shape (e.g., cylindrical vs. pouch cells), whether the separator is standalone or in the form of the coating on the electrode or another membrane and/or other parameters. In some designs, it is preferable to achieve and utilize a separator layer with a minimum bending radius in the range from around 0.005 cm to around 20 cm (in some designs, from around 0.1 mm to around 3 cm, and in other designs, from around 0.2 cm to around 2 cm).

A typical calculating unit of a battery cell typically comprises a unit area of half of the anode current collector foil, one side of the anode coating, a separator layer, one side of the cathode coating and half of the cathode current collector foil. In some designs, porous and flexible ceramic separator layers deposited (as a coating) either on one of the electrode (or both electrodes) or on one (or both) surface of the separator membrane may comprise small fibers or small flakes that are not strongly bonded to each other or to larger fibers or flakes using strong chemical bonds. Instead, in some designs, the small fibers or small flakes may be bonded to each other or to larger fibers or flakes using electrostatic or van der Waals forces or hydrogen bonding or by using a small amount (e.g., about 0.01-30 wt. %) of a polymer binder. In some designs, if the electrode expands in lateral dimensions during cycling, the small fibers or flakes within such layer(s) may advantageously move relative to each other without forming cracks or other undesirable defects that may lead to cell failure. In some designs, using two or more separator coatings in a calculating unit of a battery cell (e.g., one on the cathode and one on the anode or one on the separator and another on the cathode, or one on the cathode, one on the anode and a third one on the separator, etc.) may be advantageous in terms of reducing probability of forming internal shorts, improving yield of high quality cells and improving cell robustness.

In some designs, it may be advantageous for standalone separating coating layers comprising small ceramic (e.g., oxide) fibers or flakes to exhibit thickness in the range from around 3.0 micron to around 60.0 micron (in some designs, from around 5.0 micron to around 15.0 micron). For example, too large membrane thickness may reduce energy and power density of the battery to the undesirably low levels, while too small membrane thickness may make it difficult to handle, achieve high cell production yield and prevent defects during cell operation (e.g., formation of internal shorts, etc.).

As previously mentioned, in some designs, at least one of the electrodes (or both) may be coated with a separator layer. In some designs, there may be no additional standalone separator membrane used in a cell. In some designs, such a separator layer fabrication process may require formation of a stable dispersion of small ceramic (e.g., oxide) fibers (or flakes or other suitable particles). In a conventional cell construction, standalone sheets of polymer separators are fabricated and sold in large rolls to cell manufacturing facilities. These sheets are cut up into form factors for the desired cell builds or kept as a sheet to be wound into a multilayer cell. In some designs, a coatable dispersion of small ceramic (e.g., oxide) fibers (or flakes or other suitable particles) may enable coating directly on the surface of the electrode, while the electrode is still on the roll (for example, by using a roll-to-roll process). In some designs, formation of a suitable separator coating layer may enable one to reduce the volume fraction of inactives in a cell (e.g., because such a layer may configured to be thinner than a standalone separator; for example, be advantageously from around 0.5 micron to around 5.0 micron in thickness) and may additionally simplify cell construction and reduce cell fabrication cost. In some designs, various polar solvents may be effectively utilized for the formation of suitable dispersion of small ceramic (e.g., oxide) fibers (or flakes or other suitable particles). Suitable examples of such solvents include, but are not limited to water, various alcohols (ethanol, methanol, acetone, propanol, many others), various glycols, various glycol ethers, various ethers, N-Methyl-2-pyrrolidone (NMP), dimethylformamide (DMF), methyl ethyl ketone (MEK), hexamethylphos-phoramide, cyclopentanone, acetonitrile, tetramethylene sulfoxide, e-caprolactone and many others (depending on the polymer use, facilities available, costs and other factors). In some designs, suitable viscosities of the dispersion (colloid) of small ceramic (e.g., oxide) fibers (or flakes or other suitable particles) may range from around 1 to around 10,000 cp (e.g., depending on the coating method used) and may be adjusted by adjusting weight % solids and/or additives. In some designs, high tensile strength requirements established for traditional standalone separators (which are established to enable the processing of wound rolls of separator membranes) may be substantially reduced or even completely eliminated. In some designs, suitable dispersion may also comprise a polymer binder or a surfactant or both. For example, such a polymer may help to produce a more uniform dispersion of the small fibers (or small flakes or small particles) and achieve better mechanical properties. In some designs, a plasticizer may be used in conjunction with a polymer to enhance separator coating properties. In some designs, the suitable fraction of the polymer binder in the final coating layer may range from around 0 to around 50 wt. % (e.g., from around 0.5 wt % to around 50 wt. %). In some designs, the suitable porosity of the final coating separator layer may range from around 10 vol. % to around 90 vol. % (e.g., more preferably, from around 25 vol. % to around 80 vol. %). In some designs, such a coating separator layer may be deposited using pre-metered coating means (such as a spray coating or a slot-die (or gravure) coating methods) or self-metered coating means (such as dip-coating, roller-coating, knife-edge coating, among others). In some designs, the coating layer be advantageously deposited using a solvent-free (solvent-less) method. Examples of such suitable coatings may include but are not limited to a magnetic assisted impaction coating, supercritical fluid spray coating, electrostatic coating, dry powder coating, photo-curable coating, to name a few. In some designs, it may be advantageous to heat-treat to the coating layer prior to final cell assembling. The suitable heat-treatment temperature may range from around 40 to around 200 °C, depending on the coating composition and the battery chemistry. Such a treatment may enhance adhesion and mechanical properties of the coating, help to remove undesirable contaminants or favorably re-distribute a polymer component (if present) in the coating. In some designs, it may be advantageous not to calendar the electrode after the separator coating is deposited (e.g., to prevent formation of undesirable of defects or for other performance, stability or cost benefits).

Note that the small fiber (or small flake)-comprising suspension compositions like those disclosed in this application for the preparation of the coating separator layer may also be effectively used for the preparation of standalone membranes. Similarly, the same or similar methods may also be used for the preparation of standalone membranes as described herein for the preparation of the coating separator layer.

In some applications (e.g., in some air filtrations or in some liquid filtration or in some membranes used in energy storage (e.g., Li-ion batteries) or energy conversion (e.g., fuel cell) applications), the separating layer described herein may be deposited on another standalone or supported membrane (e.g., one with larger pores or the one that may exhibit better mechanical properties). As previously mentioned, in some designs, at least one of side of the standalone battery separator membrane may similarly be coated with small ceramic (e.g., oxide) fibers (or flakes or other suitable particles). Such a separator coating may also comprise a polymer and may be used in conjunction with the coating of at least one of the electrodes to enhance cell safety. In some designs, a roll-to-roll application system may be utilized for the separator membrane coating.

In some designs, a slot die coating may be particularly advantageously used to form a separator layer coating (e.g., on the surface of one or both electrodes) from a suitable dispersion of small ceramic (e.g., oxide) fibers and other suitable particles or their mixtures. In some designs, this dispensing process may be particularly valuable in scenarios where the electrode surface has imperfections. For example, if it is known that the surface of the electrode has substantial thickness variance (e.g., +/- about 1 µm or +/- about 3 µm), then that uncertainty may be added to the target thickness of the separator. In this manner, valleys in the electrode would be filled in, while peaks in the electrode may have an additional buffer of a separator layer. Furthermore, because the small fibers may have length dimensions on the same order as the uncertainty in the electrode coating, in some designs, dispensing a coating of such fibers at a thickness which includes the desired thickness of the separator plus twice the uncertainty of the coating layer should typically be sufficient to cover any peaks.

As described above, in some designs, ceramic-based separator layers separator layer (e.g., standalone separator membranes or separator coatings) in energy storage applications may be infiltrated with a liquid or a solid (at operating temperatures) electrolyte when used in devices so as to provide superior strength, puncture resistance, outstanding thermal stability, low thermal expansion coefficient, relatively high dielectric constant, low cost, scalable manufacturability in thin form (e.g., down to about 0.1-0.5 microns in some designs), good wetting properties for a broad range of materials, stability against reduction at low potentials (e.g., as low as about 0 V vs. Li/Li+ in the case of aluminum oxide) and against oxidation at high potentials (e.g., as high as about 10 V vs. Li/Li+), resistance against dendrite growth and/or other positive attributes of the disclosed membranes, which makes ceramic-based separator layers (e.g., standalone separator membranes or separator coatings) particularly attractive in a broad range of energy storage applications, including but not limited to various metal ion (such as Li-ion, Na-ion, Mg-ion, etc.) based energy storage devices (e.g., batteries including Li and Li-ion batteries, Na and Na-ion batteries, Mg and Mg-ion batteries, electrochemical capacitors, hybrid devices, etc.), to name a few.

In some designs, it may be advantageous to deposit a layer of another material on the surface of the small ceramic (e.g., oxide) fibers (or flakes). This may be for a desired modification of mechanical properties, modification of dielectric properties, modification of interfacial properties (such as interfacial energy, strength, wetting angle, tribological properties, etc.), modification of optical properties, protection against undesirable side reactions, and/or other reasons. In some designs, a suitable surface layer thickness may for the other material may range from as thin as sub-monolayer (e.g., discontinuous monolayer, in a range between about 0.01-0.2 nm in average thickness) to as thick as around 1.00 µm (one micron). In an example, an average layer thickness ranging from around 0.3 nm to around 30 nm may be preferred for many applications.

Depending on the application, the surface layer on the small ceramic fibers (or flakes) may be a polymer, carbon, dielectric, or ceramic material. Examples of suitable ceramic surface layers include, but are not limited to, various oxides, various chalcogenides (e.g., sulfides) and oxi-chalcogenides, various halides (e.g., fluorides) and oxi-halides, various nitrides and oxi-nitrides, various carbides and oxi-carbides, various borides, their mixtures, and others. In some applications, the surface layer on the small ceramic fibers (or flakes) may also be advantageous to form a composite surface layer coating. In some applications, the surface layer on the small ceramic fibers (or flakes) may also be advantageous to form a porous coating layer. In some designs, the pores in the coating layer may be filled with another functional material. In some applications, the coating layer may leave closed pores within the porous oxide fibers. In some applications, these closed pores may be filled (pre-filled) with another functional material. In some applications, the pores may also be open. In some applications, the coating layer may include one or more closed and filled (pre-filled) pores along with one or more open pores (or surface pores).

In some applications, it may be advantageous to arrange two or more layers of materials as a surface coating on the small ceramic fibers (or flakes). These layers may differ in terms of composition, density, porosity, surface chemistry, mechanical or optical properties, and/or other substantial differences. For example, the inner layer of the coating may have smaller pores and the outer layer of the coating may have no pores thus forming closed pores within the small fibers or flakes. Such pores may be filled with another useful material that may advantageously diffuse out of the membrane during device (e.g., Li-ion battery) operation (e.g., electrolyte additive).

In some designs, different methods may be suitable for the formation of surface layers. These include but are not limited to: conversion and deposition reactions conducted in gaseous or liquid environments and their combinations. Examples of suitable deposition methods in a gaseous phase include, but are not limited to, various types of chemical vapor deposition (CVD) (including plasma enhanced deposition), atomic layer deposition (ALD), physical vapor deposition (PVD, such as sputtering, pulsed laser deposition, thermal evaporation, etc.), and their various combinations. CVD and ALD may be preferable in some applications requiring more conformal and more uniform (yet relatively economical) deposition. Examples of suitable liquid phase depositions include, but are not limited to: electrodeposition, plating, electrophoretic deposition, layer-by-layer deposition, sol-gel, chemical solution deposition or chemical bath deposition (CSD or CBD), and others.

In some designs, some synthesis techniques are particularly advantageous for the formation of suitable ceramic small fibers (or small flakes) for the separator layer (e.g., standalone separator membrane or separator coating) compositions.

In some designs, techniques for synthesis of small ceramic fibers and flakes include catalyst-assisted chemical vapor deposition (CVD), cylindrical template-based synthesis, hydrothermal synthesis, electrospinning, formation of small rolls from platelets and others. For some applications, such techniques may suffer from high price and small yield (particularly in the case of CVD, electrospinning and hydrothermal synthesis at high pressures). In addition, small fibers and small flakes produced by such techniques may be difficult or expensive (or unsafe) to incorporate into separator layer (e.g., standalone separator membrane or separator coating) compositions.

By contrast, in accordance with at least one embodiment of the disclosure, small ceramic fibers (and/or small ceramic flakes) produced by certain techniques may be particularly advantageous for use in the formation of suitable ceramic separator layer (e.g., standalone separator membrane or separator coating) compositions. Moreover, in some designs, it may be advantageous to incorporate small ceramic fibers (or flakes) produced via different techniques.

One exemplary technique for formation of small ceramic fibers (or flakes) is via controlled oxidation of molted metal(s) or metal alloy(s). In one example, small metal oxide fibers may be produced by controlled oxidation of liquid aluminum or aluminum alloys or liquid magnesium or magnesium alloys (in some designs by using certain additives in these aluminum or magnesium alloys, such as vanadium, chromium, manganese, iron, cobalt, nickel, copper, zinc, selenium, sulfur, silicon, germanium, tellurium, cerium, praseodymium, neodymium, cerium, promethium, samarium, europium, gadolinium, gallium, terbium, dysprosium, holmium, erbium, thulium, ytterbium, among others). The small ceramic fibers produced by this technique may exhibit diameters in the range from around 3 nm to around 20 nm and very high aspect ratio (e.g., in the range from around 50 to around 500,000), and may further comprise a total open pore volume among the small ceramic fibers (e.g., encompassing open pore volume in the individual fibers, such as surface pores, as well as any intervening pore space in-between the fibers when deployed in a ceramic-comprising separator layer) in the range from around 0.01 cm³/g to around 1 cm³/g. In some synthesis designs, the length of the ceramic (e.g., oxide) fibers produced by such a technique may exceed about 1 cm and in some cases may exceed even about 10 cm (in some special cases, the length may even exceed about 100 cm). Furthermore, in some designs, such small ceramic fibers (e.g., aluminum oxide fibers) may be produced in bulk (as large blocks or aggregates) with overall volumes that may exceed 1 cm³ or even about 1000 cm³ or (in some cases) even about 1000,000 cm³. As such, in some designs, these bulk pieces of weakly bonded small fibers may be broken apart and processed in order to produce a suitable separator layer (e.g., a standalone separator membrane or a separator coating). In some designs, the small ceramic (e.g., oxide) fibers may also be produced via controlled oxidation of solid metal alloy(s) of suitable composition(s) at suitable temperatures (e.g., when the passivation oxidized layer does not form and the transformation of the material into a fiber-shape is energetically preferable during the oxidation process). Another exemplary technique for formation of small ceramic fibers (or flakes) may involve intermediate formation of small organometallic fibers (e.g., metal alkoxide fibers, such as aluminum ethoxide or lithium-aluminum-ethoxide or aluminum-magnesium ethoxide or aluminum-magnesium-lithium ethoxide, among others), followed by their conversion into small ceramic (e.g., oxide) fibers. Such intermediate formation of small organometallic fibers may be effectively used for the fabrication of porous small ceramic (e.g., oxide) fibers with controlled porosity and degree of crystallinity (such fibers could be made, for example, X-ray amorphous or be produced as polycrystalline with a controlled size of the crystalline grains). In some designs, formation and use (in membranes) of amorphous (or polycrystalline with an average grain size in the range below around 20.0 nm, such as between around 0.5 nm to around 20.0 nm) small fibers may be particularly attractive (e.g., these amorphous or nanocrystalline fibers could be less brittle, exhibit higher strength or other positive attributes). In an illustrative example, such a technique may involve (i) formation of suitable bimetallic alloy(s) (e.g., Al-Li, Mg-Li, Al-Mg-Li, etc.) of suitable composition(s) (e.g., lithium-comprising metal alloys with Li content in the range from around 4 at. % to around 50 at. %), (ii) exposure of such bimetallic alloy(s) to suitable solvent(s) (e.g., suitable alcohols such as ethanol, isopropanol, etc.) in order to preferentially dissolve the more reactive metal (e.g., Li from the Al-Li or Mg-Li or Al-Mg-Li alloys) and simultaneously form small organometallic fibers of the less reactive metal(s) (e.g., Al or Mg or mixed metal alkoxides, such as ethoxide, isopropoxide, methoxide and other related compounds) while preventing passivation of the less reactive metal, (iii) exposing the small organometallic fibers to an oxygen-comprising environment (e.g., dry air) to transform the small organometallic into small oxide fibers (e.g., aluminum oxide (e.g., Al₂O₃) or magnesium oxide (e.g., MgO) or mixed aluminum-magnesium oxide or mixed aluminum-lithium oxide or aluminum-magnesium-lithium oxide or other oxides, etc.), which may be porous. In some approaches, small alkoxide (e.g., ethoxide) fibers may also be formed from alkoxide (e.g., ethoxide) powders via solution growth in an alcohol (e.g., ethanol) at elevated temperatures (e.g., 50-200 °C). In some designs and applications (e.g., if used in a Li-ion battery separator), it may be advantageous for the small oxide (or oxyhydroxide or oxyfluoride or oxynitride or, more generally, oxygen-containing) fibers or small oxide (or oxyhydroxide or oxyfluoride or oxynitride or, more generally, oxygen-containing) flakes to comprise from around 2.0 at. % to around 50.0 at. % aluminum (Al) atoms (e.g., in some designs, from around 2.0 at. % to around 40.0 at. % aluminum (Al) atoms). In some designs and applications (e.g., in some filters and certain battery types), it may be advantageous for the small oxide (or, more generally, oxygen-containing) fibers or small oxide (or, more generally, oxygen-containing) flakes to comprise from around 0.1 at. % to around 35.0 at. % silicon (Si) atoms.

In some synthesis approaches, the produced small organometallic fibers may form agglomerates (bunches), which may be at least partially separated (exfoliated) into individual fibers or smaller bunches by heat-treatment in a solvent (e.g., alcohol, such as ethanol, methanol, propanol, isopropanol, etc.) at temperatures in the range from around room temperature to around 200 °C (depending on a particular chemistry and solvent properties, including vaporization point and vapor pressure at different temperatures). In some designs, the produced small oxide fibers may comprise significant amount of residual lithium (e.g., about 0.01 - 20 at. %), this forming lithium-aluminum oxide or lithium magnesium oxide or lithium aluminum magnesium oxide, among other suitable compositions. In some designs of Li-ion batteries, such presence of Li may be advantageous for cell stability. In some synthesis designs, water or aqueous solutions of the desired pH (e.g., basic) may be used instead of the solvent(s) to form metal hydroxide, metal or metal oxide fibers. In some synthesis designs, the organometallic fibers may be at least partially converted into hydroxide fibers prior to conversion into oxide (or other ceramic) fibers. In some designs, the small ceramic fibers produced via the above-noted synthesis process may exhibit average diameters in the range from around 20 nm to around 2,000 nm (depending on synthesis conditions) and high aspect ratios (e.g., from around 20 to around 100,000 in one example, from around 50 to around 100,000 in another example). In some synthesis designs, the length of the ceramic (e.g., oxide) fibers produced via the above-noted synthesis process may exceed about 10 microns. In some synthesis designs, the length of the small ceramic (e.g., oxide) fibers produced via the above-noted synthesis process may exceed about 1 mm. In some designs, the small ceramic (e.g., oxide) fibers may form large aggregates or blocks (bulk pieces) when separated from a solvent and dried.

Another favorable exemplary technique for formation of small ceramic fibers (or flakes) that also involve intermediate formation of small organometallic (precursor) fibers (e.g., alkoxide precursor fibers) is based on blow-spinning (e.g., melt spinning or solution spinning) of the organometallic (precursor) fibers and their subsequent transformation into oxide (or other ceramic) fibers (including porous fibers) by heat-treatment in a controlled gaseous environment (e.g., dry air or oxygen containing environment). In some designs, conversion to oxide (or other ceramic) fibers from the processor may take place during the blow-spinning when the process is conducted at elevated temperatures in a proper (e.g., oxygen containing) gaseous environment. In some designs, flame pyrolysis may be effectively utilized. In some designs, a polymer and/or other materials may be added into the blow-spinning precursor solution to control its viscosity, (nano)fiber morphology and porosity of the final product (small fibers). in some designs, the polymer may be burned or oxidized or otherwise (at least partially) removed in the final product (small fibers).

In some designs, a dispersion of small ceramic (e.g., oxide) fibers (or small or large flakes) produced via the above-noted synthesis process (or by other suitable synthesis processes) may be formed by taking block(s) (or bundle(s) or aggregate(s)) of small ceramic fibers (or small or large flakes), adding a solvent (such as an alcohol or water or others), and then using physical agitation (e.g., milling, sonication, ultrasonication, various other mixing techniques, etc.) to break up the bundle to enable individual small ceramic fibers or flakes (or small bundles of less than about 10-20 fibers or flakes) to float freely in the solvent. In some designs, heating to elevated temperatures (e.g., about 50-200 °C) and exposing to elevated pressure (e.g., about 1-1000 atm.) may be utilized to break up the bundle to extract individual small ceramic fibers or flakes. In some designs, surfactants may be added to achieve a better (e.g., more stable or comprising a larger portion of individual fibers or flakes) suspension.

In some designs, blocks (bulk pieces) of as-produced small ceramic (e.g., oxide such as aluminum oxide or magnesium oxide or other suitable oxide) fibers (or flakes) may be physically or chemically attached to each other in a manner, which is substantially weaker than the chemical bonds which form the atomic structure of the material into a fiber (or flake). Such weak bonds between individual fibers or flakes may be broken using an appropriate form of mechanical processing without significant breakage (or at least without excessive breakage) of the individual fibers or flakes. Examples of suitable mechanical processing include but are not limited to: ball milling (including high impact or high energy ball milling), shaker milling, planetary milling, roller milling, agitator bead mills, sonication and ultrasonication. In some cases, the length of the as-produced individual ceramic fibers (or flakes) may be too long to form stable suspensions and/or to be used in the separator membranes or separator coating layers. While the optimal length of the individual ceramic fibers (or flakes) depends on a particular application, a particular solvent and particular characteristics of the separator layer (e.g., a standalone separator membrane or a separator coating) designed or other factors, when produced in accordance with the above-noted synthesis process, the maximum small fiber length (or maximum small flake diameter) may rarely exceed 500 microns. In some designs, the suitable conditions for the formation of stable dispersions of small ceramic (e.g., oxide such as aluminum oxide or magnesium oxide or other suitable oxide) fibers (particularly with the particles produced by oxidation of the metal or alloy melt) or flakes (particularly flakes with thickness below around 50 nm) are described below.

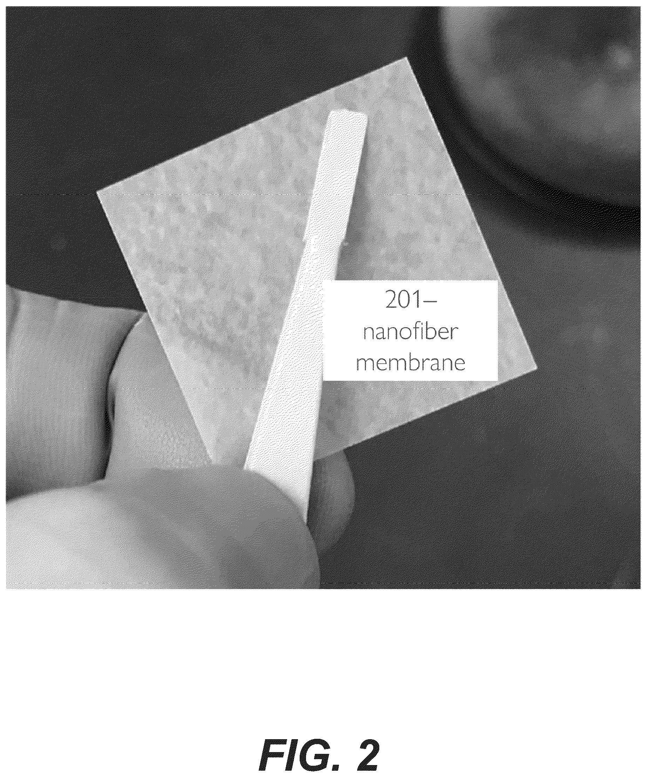

FIG. 2 illustrates an example image of a standalone Al₂O₃ nanofiber separator membrane 201. The membrane in this example was prepared by coating a Al₂O₃ nanofiber dispersion on a substrate, drying the coating and removing from a substrate. The Al₂O₃ nanofiber dispersion was prepared from blocks (bulk pieces) of as-produced Al₂O₃ nanofibers by suitable wet milling conditions.

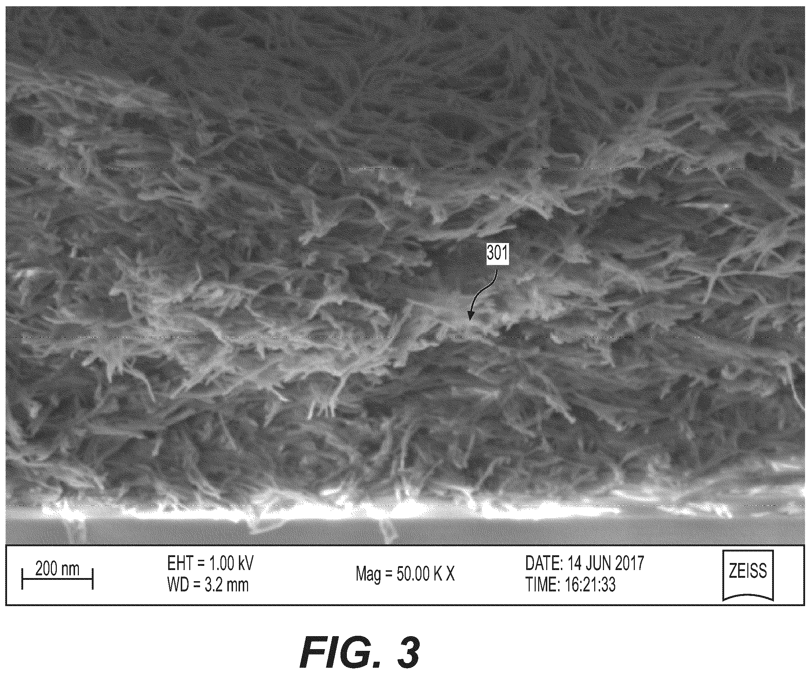

FIG. 3 illustrates an example scanning electron microscopy (SEM) cross-sectional micrograph of a separator membrane 301 made from Al₂O₃ nanofibers produced by oxidation of an aluminum alloy melt. The membrane in this example was prepared from a Al₂O₃ nanofiber dispersion, which, in turn, was prepared from blocks (bulk pieces) of as-produced Al₂O₃ nanofibers by suitable wet milling (milling in a liquid media) conditions.

In some designs, milling conditions (such as speed, media size or diameter, media mass, vessel geometry, type of milling, etc.) may affect dispersion characteristics (such as final aspect ratio and final size distribution of small fibers or their small bundles).

In some process designs, a roller mill may be used to disperse a bulk of small fibers (or flakes) to achieve final fiber (or flake) aspect ratios in excess of 10,000. In some examples a roller mill may be used to disperse a bulk of small fibers (or flakes) to achieve final aspect ratios in excess of about 5,000. In some examples, a roller mill may be used to disperse a bulk of small fibers (or flakes) to achieve final aspect ratios in excess of about 1,000.

In some process designs, bulk of small fibers (or flakes) may be placed in a (e.g., cylindrical) vessel, with milling media and a solvent. Various examples of the qualities of the milling media, solvent and milling conditions are described below. In some examples (particularly with respect to particles produced by oxidation of a metal or alloy melt), the milling media diameter may be selected in between around 0.01 cm and around 0.1 cm. In some examples, the milling media diameter may be selected in between around 0.1 cm and around 1 cm. In some examples, the milling media diameter may be selected in between around 1 cm and around 5 cm. In some designs, milling media of different sizes (e.g., diameters) and/or compositions may be combined to achieve the most desirable dispersion. In some designs, the optimal size (e.g., diameter) of the milling media may depend on the fiber (or flake) dimensions and properties, speed of mechanical agitation, size of the vessel, density of the milling media and/or other conditions. For example, too small of a milling media diameter (e.g., below around 0.01 cm) may result in a heterogeneous mixture of small fibers (or flakes) with a broad distribution of aspect ratios and/or bundles of fibers (or flakes) that are not fully separated and dispersed. Such a dispersion may have poor coating qualities, such as non-wetting to the substrate, non-uniform coating thickness, and macro-porosity (vacant spaces of disconnected film within the coating), among others. A separator film or membrane made from a dispersion with poor coating qualities may have a weakened puncture and tensile strength, may be more susceptible to shorting during cell fabrication or during cycling, and may exhibit inferior ion transport properties. On the other hand, if the milling media is too large, the resulting dispersion may consist of many bundles of large aspect ratio wires, as a media with a diameter much larger than the width of the nanowire may not be able to efficiently interact. Such a dispersion may create a coating film or separator membrane with poor surface uniformity and micro-porosity (vacant spaces between the large fiber bundles of an undesirable large size). A film made from a dispersion with poor coating qualities would have weakened puncture and tensile strength, and is more susceptible to shorting.

In some process designs, it may be advantageous to combine multiple media sizes for the milling of the small ceramic fibers (or flakes) and/or to use multiple milling stages with different sizes of media or, more broadly, different milling conditions (which may include using different solvents, different media, different milling energy and speed, etc.). In some designs, it may be advantageous to mill the small ceramic fibers (or flakes) via multiple stages with different types of agitation (e.g., a combination of different milling types or combine a milling and sonication (or ultrasonication) in a single stage or in multiple stages).

In some process designs, the solvent used in the milling process may be water. In some designs, the solvent used in the milling process may be an alcohol with a carbon chain size in the range of 1 and 5 carbons or in the range of 6 and 10 carbons. In some designs, the optimal size of the alcohol molecule (e.g., to achieve the most stable dispersion with the largest fraction of individual small fibers or flakes or flakes/fibers with the desired sizes) may be affected by multiple parameters due to its impact on the dipole moment. In some designs, the solvent may be a glycol or a glycol ether. In some designs, surfactants or other additive solvents or additive salts (which may include organic or inorganic salts) may be added in small or medium quantities (e.g., from about 0.00001 vol. % to about 20 vol. %) to improve dispersion quality or to induce doping of the small fibers at a later stage of the membrane (or coating) preparation (e.g., to induce local sintering or bonding between the fibers or flakes, etc.). In some designs, different sizes (or batches) of fibers may comprise different additives. In some designs, these batches are mixed together prior to electrode/separator coating or membrane formation. In some designs, the special doping of individual batches or different composition of the fibers (or flakes) may induce bonding between the binders from different batches without inducing comparable bonding between the fibers (or flakes) of the same batch (e.g., upon heat-treatment). In some designs, additives may be added after the dispersion or milling process. In the case when additives are used in the dispersion/milling process, the solvent choice may be affected by the compatibility of the solvent and the additive. In an example, the impact of the dipole moment of the solvent may impact the flocculation (agglomeration) time for the particles (e.g., fibers or flakes) of a given size.

In some designs, the suitable milling media material may be yttria (Y₂O₃) stabilized zirconia oxide (YZT), corundum (Al₂O₃), steel, tungsten carbide, etc., to provide a few examples. In some designs, the milling media material may have a large effect on the properties of the dispersion. For example, if the media is not sufficiently dense, the media may not have enough inertia to break up and disperse large bundles of nanowires at a given milling speed. Conversely, if the milling media has a density greater than desired it may cause fracturing of the fibers (or flakes) perpendicular to their "long axis", resulting in the particles with an undesirably small aspect ratio.

In some designs, polymer(s) (in some designs with plasticizers) and/or surfactant(s) may be added to the slurry during milling to assist in the formation of stable colloids comprising individual small fibers (or flakes) or agglomerates of only a relatively small number of small fibers or flakes (e.g., about 2 to about 2,000).

In some examples, the suitable loading of small ceramic (e.g., oxide) fibers (or flakes) in the milling vessel may be between about 0.01 and about 1 wt. % of the total dispersion (e.g., flakes/fibers + media + solvent + additives) mass. In some examples, the suitable loading of the small ceramic (e.g., oxide) fibers (or flakes) in the milling vessel may be between about 1 and about 10 wt. % of the total mass of the dispersion. In some designs, if the weight percent is too high, then the milling may take an excessively long time, or the media may not impact the small fibers (or flakes) in the desired fashion needed to create a substantially uniform and stable dispersion. Furthermore, in some designs, the loading of the small fibers (or flakes) may have a direct effect on the final viscosity of the dispersion, which may be a critical parameter for the final separator coating (or separator membrane) quality. For example, if the weight percent is too low, then the milling media may undesirably wear excessively due to media-media impacts/interactions during milling and the dispersion viscosity may be lower than desired. In some examples, the loading of milling media in the milling vessel may be between about 1 and about 50 wt. % of the total mass/weight of (flakes/fibers, solvent and additives) combined. In some examples, the loading of milling media in the milling vessel may be between about 50 and about 100 wt. % of the total mass/weight of (flakes/fibers, solvent and additives) combined. In some examples, the loading of milling media in the milling vessel may be between about 100 and about 200 wt. % of the total mass/weight of (flakes/fibers, solvent and additives) combined. In some examples, the loading of milling media in the milling vessel may be between about 200 and about 300 wt. % of the total mass/weight of (flakes/fibers, solvent and additives) combined. In an example, if the weight percent of the milling media is too low, then the milling may take an excessively long time, or the media may not impact the nanowires in the desired fashion needed to create a substantially uniform and stable dispersion. Furthermore, in an example, the loading of the milling media may have a direct effect on the final viscosity of the dispersion, which may be a critical parameter for final separator film / membrane quality. On the other hand, in an example, if the weight percent of the media is too high, then the milling media may wear excessively due to media-media impact and the dispersion viscosity may be lower than desired.

In some designs, the rotational speed of the milling vessel may have a significant impact on the quality of the dispersions and may depend on the size and density of the milling media, the density and mechanical properties of the small fibers (or flakes), the difference in density of the fibers and solvent, the size of the milling vessel, and/or other parameters. In some examples, a suitable rotational speed of the milling vessel may be between about 50 and about 100 rpm. In some examples, the suitable rotational speed of the milling vessel may be between about 100 and about 200 rpm. In some examples, the suitable rotational speed of the milling vessel may be between about 200 and about 300 rpm. In some examples, the suitable rotational speed of the milling vessel may be between about 300 and about 400 rpm. In some examples, the suitable rotational speed of the milling vessel may be between about 400 and about 600 rpm. In some examples, the suitable rotational speed of the milling vessel may be between about 600 and about 2000 rpm. In some examples, the suitable speed of the milling vessel may be between about 0.3 and about 1 m/sec. In some examples, the suitable speed of the milling vessel may be between about 1 and about 2 m/sec. In some examples, the suitable speed of the milling vessel may be between about 2 and about 3 m/sec. In some examples, the suitable speed of the milling vessel may be between about 3 and about 6 m/sec. In some examples, the suitable speed of the milling vessel may be between about 6 and about 14 m/sec. In some designs, if the rotational speed of the milling vessel is too high, the resulting dispersion may comprise small fibers of an undesirably low aspect ratio (e.g., all the way down to near-spherical nanoparticles). In some designs, a separator layer (e.g., a standalone separator membrane or a separator coating film) made from such an undesirable dispersion may be prone to brittleness and cracking and may have poor mechanical properties, such as weakened puncture and tensile strength and be more susceptible to shorting (e.g., during fabrication and/or cycling). In an example, if the rotational speed of the milling vessel is too low, the resulting dispersion may consist of a heterogeneous mixture of small fibers (or flakes) with undesirably board distribution of aspect ratios, as the rotational speed of the mill may not give the media sufficient energy to break up large bundles of fibers (flakes). Such a dispersion may create a film with poor surface uniformity and micro-porosity (e.g., vacant spaces between the large fiber bundles of an undesirably large size). A separator layer (e.g., a standalone separator membrane or a separator coating film) made from such an undesirable dispersion may exhibit poor qualities (such as weakened puncture and tensile strength and be more susceptible to shorting during cell construction or operation). In some examples, the suitable milling time may range from around 10 to around 30 minutes. In some examples the suitable milling time may range from around 30 to around 60 minutes. In some examples the suitable milling time may range from around 60 to around 120 minutes. In some examples the suitable milling time may range from around 120 to around 240 min. In some examples the suitable milling time may range from around 240 to around 480 minutes. In some examples the suitable milling time may range from around 480 minutes to five days.

At the end of the milling procedure, the resultant milled product (e.g., a milled mixture of small ceramic fibers or flakes with solvent and/or additives, etc.) may be characterized as a slurry. In some examples, the suitable final slurry viscosity may range from around 50 to around 500 centipoises. In some examples, the suitable final slurry viscosity may range from around 500 to around 1000 centipoises. In some examples, the suitable final slurry viscosity may range from around 1000 to around 2000 centipoises. In some examples, the suitable final slurry viscosity may range from around 2000 to around 10,000 centipoises. In some designs, when creating a stable and functional dispersion of ceramic small fibers (or flakes), the final slurry viscosity may be a critical parameter which may be controlled by loading of milling media, loading of small ceramic fibers (or flakes), solvent composition, additive composition and/or processing conditions. In some designs, the above-noted conditions that can be used to control the final slurry viscosity containing the small ceramic fibers (or flakes) may be quite distinct from the conditions that may be used to make a dispersion of nanoparticles with a similar viscosity. In other words, a desirable dispersion may have a certain viscosity, but not all dispersions with a certain viscosity are desirable.

Although there are many possible combinations of milling media material, solvent, additives, milling media sizes, loading of small fibers (such as Al₂O₃ or MgO or ZrO₂ fibers or others), milling speed and milling time, some of such combinations may produce significantly better quality of the final separator layer (e.g., a standalone separator membrane or a separator coating) than other combinations.

In one illustrative example of a suitable slurry formulation, 8 g of bulk small Al₂O₃ fibers produced by oxidation of an Al alloy melt were broken into approximately 0.05 g pieces and placed in an 8 oz jar. Then, 16 pieces of ½'' diameter steel media were added to a jar together with 200 ml of ethanol and no additives (no salts and no solvent additives). The sample was mixed on a roller milled at 160 rpm for 12 hours to achieve a good quality of the dispersion with the desirable uniformity and individuality of the small fibers and desirable aspect ratio.

As discussed above, in some designs, the milling conditions that are optimal for achieving good dispersion of small fibers (or flakes) from the bulk may be distinctly different from those conditions that are optimal for nanoparticles or large particles. For example, in some designs, to obtain a dispersion of nanoparticles with a mean size of about 100 nm, a media of size of about 0.1 mm or smaller should preferably be used. Furthermore, in some designs, the speed of the mill and loading ratio should preferably be further optimized to the type of particle being milled, as well as the solvent and milling time. In contrast, in some designs, to achieve a good (e.g., suitable for the separator layer fabrication, e.g., either as a standalone separator membrane or a separator coating) dispersion of small fibers with about 100 nm diameter, it may be preferred to use media size of about 1 mm or larger.

In the examples above it may be helpful to consider the dimensions of the materials prior to milling. As an illustration, in a milling process, particles with dimensions on the order of approximately 100 µm may be size reduced by milling with a media sized on the order of about 10 mm to an average longest dimension (e.g., length of fibers or width of flakes) of approximately 10 µm. In the case of fibers, in some designs, the media size can be chosen to target the largest dimension (length) of the fiber for size reduction. For example, if the fibers are on the order of about 100 µm long and about 100 nm in diameter, then choosing a large media diameter such as about 10 mm may preferentially size-reduce the length of the fibers to approximately 10 µm. Furthermore, in some designs, if the 100 µm x 100 nm nanofibers are bundled together in about 100 µm wide bundles, then the nanofibers may be broken up by the milling media to a maximum size of about 10 µm, but the majority will be even smaller as the bundles may preferentially fracture into about 100 nm diameter single fibers with an average length below approximately 10 µm.

In some designs, the aspect ratio of the small fibers (or flakes) in a final dispersion (e.g., prior to forming a separator layer, such as a standalone separator membrane or a separator coating) may preferably be in the range from around 1:4 to around 1:1,000,000. In some examples, the aspect ratios may range from around 1:50 to around 1:500. In other examples, the aspect ratios may range from around 1:500 to around 1:5,000. In yet other examples, the aspect ratios may range from around 1:5,000 to around 1:50,000. In some designs, the aspect ratio may affect separator layer (e.g., a standalone separator membrane or a separator coating) mechanical properties (including flexibility, strength and toughness) as well as pore size distribution and density. In some designs, it may be preferable to combine fibers of different sizes and also different aspect ratios. In some designs, larger fibers may preferably exhibit smaller average aspect ratio (e.g., by about 2 times or by about 4 times or even more) compared to small fibers or small flakes (if flakes are used instead of or in addition to fibers). Similarly, in some designs, it may be advantageous to combine small fibers with small flakes (each having its own aspect ratio distribution) or larger fibers with small flakes (each having its own aspect ratio distribution) or small fibers with large fibers and with additional flakes (each having its own aspect ratio distribution).

In one illustrative example, a dispersion of small fibers (e.g., with an average diameter between about 5-8 nm) with an average aspect ratio of around 1,000 may be mixed in at about 2:1 wt. ratio with another dispersion of larger fibers (e.g., with an average diameter between about 40-60 nm) with an average aspect ratio of around 250. This dispersion mixture can be characterized by having a bi-modal aspect ratio distribution characteristic of the two parent dispersions. This mixed suspension may then be utilized for the preparation of an effective separator layer (e.g., a standalone separator membrane or a separator coating).

In another illustrative example, a dispersion of small fibers (e.g., average diameter between about 5-8 nm) with an average aspect ratio of around 1,000 may be mixed in at about 1:1 wt. ratio with another dispersion of larger fibers (e,g,, average diameter between about 40-60 nm) with an average aspect ratio of around 150. This dispersion mixture can be characterized by having a bi-modal aspect ratio distribution characteristic of the two parent dispersions. This mixed suspension may then be utilized for the preparation of another effective separator layer (e.g., a standalone separator membrane or a separator coating).

In yet another illustrative example, a dispersion of small fibers (e.g., average diameter between about 5-8 nm) with an average aspect ratio of around 1,000 may be mixed in at about 4:1 wt. ratio with another dispersion of small porous flakes (e.g., average thickness between about 3-6 nm) with an average aspect ratio of around 200. This dispersion mixture can be characterized by having a bi-modal aspect ratio distribution characteristic of the two parent dispersions. This mixed suspension may then be utilized for the preparation of another effective separator layer (e.g., a standalone separator membrane or a separator coating).

In addition to flakes and fibers of various sizes, other types and shapes of particles or nanoparticles may be utilized for the preparation of the separator layer (e.g., a standalone separator membrane or a separator coating) (e.g., nanostars, nanorings, planar and three-dimensional dendritic nanostructures, among others) in other embodiments of the disclosure.

Returning to the use of additives for the formation of suitable dispersions, in addition to co-solvent and salts (both organic and inorganic salts), other types of additives may include but are not limited to (polymer) binders, sintering agents, anti-coarsening agents, thickeners, emulsifiers, electrostatic stabilizers, surfactants, anti-flocculants, and/or other types of additives which may be added to the solvent (e.g., prior to making a dispersion) or to the dispersion itself to achieve a desired dispersion. Any such materials are referred to as "additives" in this disclosure.

In one illustrative example, an additive (e.g., a surfactant) may be added to the solvent before the agitation process (e.g., milling) in the amount of about 2 wt. % (relative to the weight of both the solvent and small fibers or flakes). In another illustrative example, two types of additives (e.g., a sintering aid in the amount of about 3 wt. % (relative to the weight of both the solvent and small fibers or flakes) and a surfactant in the amount of about 2 wt. % (relative to the weight of both the solvent and small fibers or flakes)) may be added once the dispersion is pre-formed. In yet another illustrative example, an additive (e.g., a surfactant in the amount of about 4 wt. % relative to the weight of both the solvent and small fibers or flakes) may be added during an application of the dispersion. In yet another illustrative example, an additive (e.g., a sintering aid) may be added after application of the dispersion as a fine mist onto the separator layer (e.g., a standalone separator membrane or a separator coating) produced from the dispersion of the small fibers (or flakes). In an example, the additive(s) may also be sprayed onto the separator layer (e.g., a standalone separator membrane or a separator coating) (or the dried fibers or flakes), deposited on the top of the separator coating (or a separator membrane), or be introduced as a gaseous media (vapor), among other ways of additions.

**In** some designs, when a standalone separator membrane is prepared from ceramic (e.g., oxides such as aluminum oxide, lithium aluminum oxide, magnesium oxide, aluminum-magnesium oxide, lithium magnesium oxide, lithium-aluminum-magnesium oxide, zirconium oxide, etc.) particles (small flakes, small fibers, etc.), it may be important to achieve good mechanical properties by using one or a combination of various processing techniques. One example of a suitable processing technique is bonding individual (e.g., randomly packed, mostly within a plane) small fibers or flakes together (e.g., by sintering, including pressure-assisted sintering or other means) in a final form to form a ceramic separator membrane. In some designs, if the dispersion comprises a mixture of particles of various shapes and sizes (e.g., small fibers and large fibers or small fibers and flakes, etc.) the bonding may take place between particles of different types (e.g., in addition to bonding between particles of the same type). In some designs, bonded (e.g., by localized sintering) fibers (or flakes) may ideally retain the desired flexural and stiffness properties while increasing puncture and tensile strength among other desirable properties. One challenge in utilizing oxide fibers or flakes (e.g., small Al₂O₃ fibers or flakes) in some designs is that, without additives, such fibers (or flakes) may require high temperatures (e.g., above around 800 °C) to induce bonding to each other (e.g., via sintering) and may undesirably coarsen during the heat-treatment process. Coarsening may cause an undesirable reduction in porosity and flexibility and may increase brittleness and fracture toughness. Therefore, in some designs, it may be desirable to utilize anti-coarsening agents to either achieve bonding (e.g., sintering) at low temperatures where no substantial coarsening takes place or to reduce (minimize) coarsening at high temperatures.

In some designs, suitable additives may take the form of alkali hydroxides (such as LiOH, NaOH, KOH, etc.). Such hydroxides may transform into oxides upon heating and may form eutectics with small oxide (e.g., Al₂O₃, MgO, ZrO₂, etc.) fibers (or flakes), thereby enabling lower sintering temperatures. In some designs, such additives are introduced into either the dispersion (suspension) of fibers (or flakes) or into the pre-formed separator layer (e.g., a standalone separator membrane or a separator coating), heat-treated at temperatures sufficiently high to provide moderate mobility but sufficiently small to induce transformation to oxide to be primarily located at the areas where neighboring fibers (or flakes) touch each other.

In some designs, separator membranes may first be formed not from the small elongated ceramic (e.g., oxide) particles of suitable shape and size (e.g., small fibers or small flakes, etc.), but rather from the small elongated particles (e.g., small or large fibers or small flakes or their mixtures, etc.) of organometallic compounds (e.g., metal alkoxides, such as aluminum alkoxides, such as aluminum ethoxide, among many others).

In one illustrative example, a small amount of concentrated solution of LiOH in one solvent ("solvent A") (dry butanol in this example) may be added to a suspension of small aluminium (or magnesium or other suitable metal) alkoxide (e.g., aluminum ethoxide or magnesium isopropoxide, etc.) fibers (e.g., about 50-100 nm in diameter) dispersed in another solvent ("solvent B") (dry ethanol in this example). The mixture may then be coated on a substrate to form a thin (e.g., approximately 20 micron thick) film. Once a dry film is left, the hydroxide and alkoxide phases may be converted to oxide phases by heating the samples in an oxidizing environment (e.g., dry air) at elevated temperatures (e.g., at about 300-1100 °C).

In some designs, it may be advantageous to use a mixture of ceramic (e.g., oxide) particles of suitable shape and size (e.g., small fibers or small flakes, etc.) together with particles of suitable shape and size (e.g., small or large fibers or small flakes or their mixtures, etc.) of organometallic compounds (e.g., metal alkoxides, such as aluminum alkoxides, such as aluminum ethoxide, among many others) to form a separator layer (e.g., a separator coating or a standalone separator membrane). In the case of a membrane, the heat-treatment of the deposited membrane in a controlled environment may soften the organometallic particles (e.g., small alkoxide fibers), while the ceramic particles (e.g., small oxide fibers) help the mixture to retain a desired shape. The heat-treatment may then bond the small oxide fibers to small alkoxide fibers, whereby the oxide fibers bond (link) the alkoxide fibers together. Further heat-treatment of the membrane in an oxidizing environment may convert the alkoxide into oxide forming an oxide membrane with the desired properties (e.g., sufficient strength, flexibility, porosity, etc.). Similar additives may also be used for the mixture of the alkoxides and oxides as for the pure oxide particles (e.g., fibers, flakes, etc.).

In some designs, suitable additives may take the form of alkali nitrate salts (such as LiNO₃, NaNO₃, KNO₃, CsNO₃, among others), which may also decompose and react with ceramic (e.g., oxide) or organometallic (e.g., alkoxide) fibers or flakes or other particles in the original dispersion. In one illustrative example, a small amount of concentrated solution of lithium nitrate in a solvent A may be added to a solution of aluminium alkoxide (ethoxide, in this example) nanowires dispersed in a solvent B. The mixture is then coated on a substrate to form a thin film (e.g., about 5-100 micron), dried and heat-treated (e.g., at about 300-800 °C). In this example solvent A is, but is not limited to, a dry alcohol like butanol, and solvent B is, but is not limited to, a dry alcohol like methanol. Once a dry film is left, the nitrate and alkoxide phases may be converted to oxide phases by heating the samples in an oxidizing environment.

In some designs, suitable additives may also take the form of alkali alkoxides, including LiOR, NaOR, KOR, CsOR, where R is an alkane with carbons numbering from 1 to 10.

In some designs, it may be advantageous to add lithium alkoxides to small alkoxide fibers (or flakes) (e.g., to aluminum or magnesium alkoxides) in various organic solvents in order to control the relative solubility of the alkoxides (e.g., to enable the precipitation of Li alkoxide within the small metal alkoxide fibers to later be used as a sintering agent). In one illustrative example, a small amount of concentrated solution of lithium alkoxide in a solvent A may be added to a solution of small aluminum alkoxide fibers dispersed in a solvent B. The mixture is then coated on a substrate as a thin film (e.g., between about 3-50 micron). If solvent B has a higher vapor pressure than solvent A, as solvent B evaporates, lithium alkoxide will begin to precipitate, nucleating at the junctions of the aluminum alkoxide nanowires where the most surface area is available. In this example, solvent A may be a dry alcohol like butanol or another suitable solvent, and solvent B may be a dry alcohol like methanol or another suitable solvent.

In some designs, after the addition of a suitable additive, the small ceramic (e.g., oxide) or organometallic (e.g., alkoxide) fibers (or flakes or other suitable particles) may be heat-treated (and bonded, e.g., sintered together, where most of the fibers become bonded to at least one of the neighboring particles, such as a neighboring fiber of a flake) to form a mechanically robust porous membrane. In some synthesis designs, at least a portion of the organometallic (e.g., alkoxide) fibers (or flakes or other suitable particles) (e.g., in a membrane) may be at least partially converted into hydroxide or oxyhydroxide fibers (or flakes or other suitable particles) prior to transformation to ceramic (e.g., oxide) fibers (or flakes or other suitable particles). In some designs, such an intermediate phase may assist in bonding these fibers (or flakes or other suitable particles) to form a mechanically robust porous membrane with desired flexibility and porosity. In some designs, a box furnace, tube furnace, belt furnace, inductive heater or other device may be utilized for heat-treatment. Depending on the application, the suitable processing temperature may range from between around 100 °C and around 1100 °C in case of the formation of the Al₂O₃ separator membrane and between around 100 °C and around 2000 °C in case of the formation of the MgO separator membrane. For other types of ceramic separator membranes, the suitable processing temperature may range from between around 100 °C and around 2000 °C. In some illustrative examples, the highest heat-treatment temperature may be between about 200 °C and about 300 °C, between about 300 °C and about 400 °C, between about 400 °C and about 500 °C, between about 500 °C and about 600 °C, between about 600 °C and about 700 °C, between about 700 °C and about 800 °C, between about 800 °C and about 900 °C, between about 900 °C and about 1000 °C, or between about 1000 °C and about 1100 °C. In some designs, the sintering temperature may preferably be optimized to match the chemistry of the additive, such that the melting point or chemical reaction (i.e., a phase transformation or eutectic melt) enabling the sintering of the small (e.g., oxide) fibers is at a lower temperature than required without an additive.

In some designs, it may be advantageous for the sintering atmosphere to be altered during heat-treatment (e.g., to enable the chemical reaction between the additive and the small ceramic (e.g., oxide) fibers at a desired temperature or the surface reaction between the small ceramic fibers). Examples of such atmospheres may include, but are not limited to, those comprising nitrogen, argon, helium, hydrogen, water vapors (H₂O) and oxygen gas or their various mixtures (e.g., in volume fractions from around 0 to around 100 %), among others. In some designs, the gaseous environment (e.g., H₂O, among others) may significantly enhance surface diffusion (relatively to the bulk diffusion) of species on the surface of small fibers so that the bonding may take place at sufficiently low temperatures where undesirable coarsening does not proceed at an undesirably fast rate.

In some approaches, reactive gas may be applied with heat to the small ceramic (e.g., oxide) or organometallic (e.g., alkoxide) fibers (or flakes or other suitable particles). In some designs, a heating rate and a ratio of reactive gas flow to non-reactive gas flow (if gas mixture is used) may be optimized for the most favorable membrane formation. In some designs, reactive to non-reactive gas ratios may range from around 0.1 to 0.990 and temperature ramp rates may generally range from around 0.1 °C/min to around 1000 °C/min, depending on the composition and chemistry of the mixture, pressure and environment (e.g., atmosphere). Examples of reactive gases include but are not limited to CO₂, H₂O, NH₄OH, NH₃, O₂, H₂, and NF₃. Examples of non-reactive gases include Ar, N₂, and other noble gases.

In some designs, laser treatment or plasma treatment may be used to induce bonding between the small ceramic (e.g., oxide) or organometallic (e.g., alkoxide) fibers.

**In** some designs, mechanical (or hydrostatic) pressure (e.g., in the range from around 1 to around 50,000 atm.) may be advantageously applied during sintering (bonding) to increase the surface area contact between the fibers during the sintering (bonding) process. In some examples, such pressure may be applied by hot press, pressure by gravity, negative pressure by dynamic vacuum.

In some designs, the heat applied to the small ceramic (e.g., oxide) or organometallic (e.g., alkoxide) fibers (or flakes or other suitable particles) may use a particular ramp rate during heating stage(s) for the most favorable membrane formation. For example, suitable ramp rates may generally range from around 0.1 °C/min to around 1000 °C/min, depending on the composition and chemistry of the mixture, pressure and environment (e.g., atmosphere).

In some designs, a polymer separator may comprise oxide particles incorporated within pores or on one of its surfaces. In these instances, the primary function of the polymer separator is to electrically separate the anode and cathode, while the oxide particles are added to provide an extra level of safety at elevated temperatures where the polymer membrane may shrink and fail. Unfortunately, the overall thermal stabilities of such composite membranes may be rather poor, the adhesion of the particles to the membrane may not be very good (e.g., ceramic particles may fall off the membrane during handling) and overall thickness of such composite membranes is typically rather larger (e.g., about 1-30 microns in some designs, and within about 15-30 microns in other designs).

One or more embodiments of the present disclosure provide for the addition of polymeric additive(s) to serve primarily as an improved mechanical support or as binder that bonds (or helps to bond) small ceramic (e.g., oxide) fibers (or other suitable particles such as flakes or their mixtures) together (or, in some designs, to the electrode or to another membrane). In such designs, the addition of a polymer enhances mechanical properties of the small fiber-comprising separator membranes or separator membrane layer (e.g., strength, flexibility, adhesion, fracture toughness, etc.). In some designs, the addition of the polymer to the membrane may reduce or prevent electrochemical reduction of the small ceramic (e.g., oxide) fibers (or other suitable particles such as flakes or their mixtures) if the separator membrane directly contacts the anode at potentials where electrochemical reduction may generally take place. For example, lithium or graphite or Sn or Si-comprising anode in a Li-ion battery may be exposed to sufficiently low potentials that may induce undesirable electrochemical reduction of the oxide (or ceramic) fibers in direct contact with it, leading to irreversible Li losses. In some designs, a thin layer of a polymer binder between the anode and the membrane or the addition of small amount of a polymer binder into the membrane may prevent such an undesirable outcome.

**In** some designs, at least a portion of the polymer component of the membrane (that comprises small ceramic (e.g., oxide) fibers or other suitable particles such as flakes or their mixtures) may be in the form of polymer fibers (including porous fibers and small fibers) or polymer flakes (including small flakes and porous flakes) or polymer comprising composite fibers or polymer-comprising composite flakes. Such polymer fibers (or flakes) may bond with or/and entangle with the small ceramic fibers (flakes) to enhance mechanical properties or processability of the separator membrane. Due to higher elasticity (and deformability) of the polymer component, the polymer component may help to form bonds with ceramic particles over a larger contact area and thus may enhance the overall strength of the membrane. In addition, in some designs, the polymer component may enhance overall elasticity of the membrane and the overall toughness of the membrane. In some designs, the polymer component (e.g., fibers or flakes) may help to form more stable suspension of ceramic particles for more uniform separation layer formation. In some designs, the polymer fibers or flakes may have smaller dimensions or aspect ratio than ceramic fibers or flakes (e.g., the polymer fibers or flakes may be in the range from around 1 nm to around 200 nm in diameter or thickness). In some designs, a smaller polymer fiber diameter may allow higher fraction of chemical groups (relative to the total polymer mass) and, additionally, may allow the polymer fibers or flakes to be more easily deformable (e.g., curve around ceramic particles) and thus potentially form more bonds with the ceramic particles. In addition, smaller polymer fibers (or flakes) may exhibit higher (cross-area normalized) strength (relative to larger polymer fibers or flakes). At the same time, larger fiber dimensions may lead to higher fiber strength on an absolute basis and thus may be advantageous in some designs. So, in other designs, polymer fibers or flakes may have larger dimensions or aspect ratio that ceramic fibers or flakes (e.g., be in the range from around 200 nm to around 10 microns in diameter or thickness). In yet other designs, it may be advantageous to utilize a combination of polymer fibers (or flakes) of different sizes or utilize a polymer in both the fiber (flake) shaped and not (e.g., as particles with lower aspect ratio or random shape or as coatings, etc.). In some designs, polymer fibers or flakes may form primary (chemical) bonds with ceramic particles in the membrane. In other designs, polymer fibers or flakes may form secondary bonds with ceramic particles (the advantageous of which have been already discussed). Depending on the application and the dimensions of ceramic particles, the aspect ratio of the polymer fibers or polymer flakes may range from around 10 to around 10,000,000.

In some designs, it may be advantageous for the individual polymer flakes or fibers to exhibit tensile strength in the range from around 10 MPa to around 10 GPa. In some designs, it may be advantageous for the polymer flakes or fibers to exhibit thermal stability in the range of about 120 °C to about 400 °C. Examples of polymer fibers (or nanofibers) with such thermal and mechanical properties include, but are not limited to various cellulose fibers (or nanofibers), various chitin fibers (or nanofibers), various aramid fibers (or nanofibers), among many others.

In some designs, it may be advantageous for the individual polymer flakes or fibers to comprise functional groups that may for primary or secondary bonds with ceramic fibers (including small fibers) or flakes (including small flakes).

In some designs, it may be advantageous for the ceramic-comprising separator layer to exhibit a tensile strength (measured at room temperature in air) in the range from around 1 MPa to around 1,000 MPa. In some designs, it may be advantageous for the ceramic-comprising separator layer to exhibit a tensile strength in the range from around 1MPa to around 1,000 MPa in the operating temperature range (particular temperature range may depend on the application; in some designs, it may range, for example, from as low as - 70 °C to as high as + 200 °C).

In some designs, it may be advantageous for the ceramic-comprising separator layer to exhibit a room-temperature tensile strength in the range from around 1 MPa to around 1,000 MPa when immersed into electrolyte or electrolyte solvent mixture.

In some designs, it may be advantageous for the ceramic-comprising separator layer to exhibit a compressive strength (in air, measured at room temperature) in the range from around 1 MPa to around 2,000 MPa. In some designs, it may be advantageous for the ceramic-comprising separator layer to exhibit a compressive strength in the range from around 1MPa to around 2,000 MPa in the operating temperature range (particular temperature range may depend on the application; in some designs, it may range, for example, from as low as - 70 °C to as high as + 200 °C).

In some designs, it may be advantageous for the ceramic-comprising separator layer to exhibit a room-temperature tensile strength in the range from around 1 MPa to around 1,000 MPa when immersed into electrolyte or electrolyte solvent mixture.

In some designs, it may be advantageous for the ceramic-comprising separator layer to exhibit a room-temperature compressive strength in the range from around 1 MPa to around 2,000 MPa when immersed into electrolyte or electrolyte solvent mixture.

In some designs, it may be advantageous for the ceramic-comprising separator layer to exhibit air permeability from around 1 L/m² sec to around 50,000 L/m² at 200 Pa (applied pressure difference across the membrane), depending on the application and the permeability of the support electrode or membrane (if present). Higher air permeability may be advantageous for high-rate applications in batteries and supercapacitors.

In some designs, it may be advantageous for the ceramic-comprising separator layer to exhibit pore exclusion size of no more than around 1 micron (e.g., from around 10 nm to around 1,000 nm). That is even if larger pores may exist in the separator layer they may be connected only with sub-micron pores so that no particles larger than, say, 1 micron (or a particular pore exclusion size) may penetrate through the membrane.

As previously described, polymer-ceramic membranes may be advantageously heat-treated (including heat-treatment under applied pressure) at temperatures in the range from around 40 to around 300 °C (depending on the polymer composition and properties, such as glass transition temperature, decomposition temperature, thermal expansion and others) to enhance membrane mechanical properties or purity. In some designs, the polymer-comprising composite membrane that comprises small ceramic (e.g., oxide) fibers (or other suitable particles such as flakes or their mixtures) may comprise composite fibers that comprise both smaller ceramic (e.g., oxide) fibers and polymer(s). In some designs, the fraction of such composite fibers in the separation membrane may range from around 1 to around 100 wt. %. Such composite fibers (including small composite fibers) may be produced by various spinning techniques, such as blow-spinning (e.g., melt spinning or solution spinning), electrospinning and more traditional spinning techniques (e.g., wet spinning, dry-jet spinning, dry spinning, etc.). Such methodologies may rely on formation of polymer-small fiber-solvent colloids or (in case, for example, of melt spinning) formation of polymer-small fiber melts. In an example, blow spinning and electrospinning may produce much smaller diameter composite fibers (down to 10 nm, provided small ceramic fibers are 10 nm or smaller). During spinning, in some designs, most of the small ceramic fibers may orient parallel to the fiber length.

The relative weight, distribution and volume fractions of the polymer in various (such as those described above) polymer-small ceramic fiber (or polymer-small ceramic flakes or, more generally, polymer-ceramic particle) composite membranes will determine their thermal, physical and chemical properties and may be optimized for specific applications. For example, a higher fraction of the polymer component may lead to reduced polarity, reduced thermal stability, increased thermal expansion, lower strength, higher flexibility, higher maximum elongation, easier processability and/or reduced oxidation stability. In another example, a higher fraction of the small ceramic (e.g., oxide) fibers (or flakes or other suitable particles) may lead to better electrolyte wetting, higher average dielectric constant, surface dipoles and electrostatic interactions with particles, higher mechanical strength (particularly under compression), higher abrasive resistance, lower thermal expansion coefficient, and/or better thermal stability. In a further example, the highest fracture toughness or modulus of toughness for such membranes may be achieved for some optimum weight fractions of the components (depending on the processing conditions, size, properties and shape of the small ceramic fibers, properties and shape of the polymer components, bonding between the polymer and ceramic particles, contact area between the polymer and ceramic particles, etc.). Overall, in some designs, a suitable amount of the polymer component (or binder) in the separator membrane (relative to the total ceramic plus polymer weight) may generally range from around 0.0 wt.% to around 80.0 wt. % (depending on the application, preparation conditions and the desired separator membrane properties). Depending on the processing conditions, an excessive fraction of the polymer component may lead to reduced membrane permeability and porosity and reduced wetting by electrolyte, reduced thermal stability, among other undesirable membrane properties.

In some designs of the polymer-ceramic composite membranes, small ceramic (e.g., oxide) fibers (or other suitable particles such as flakes or their mixtures) may provide most of the electrical separation between anode and cathode, although the polymeric additive(s) may still provide some level of increased electrical separation between the anode and cathode. In one example, the relatively small wt. % of the added polymer (e.g., about 0.1-20 wt. % relative to the total dry composite membrane weight) may be targeted to bind the small ceramic (e.g., oxide) fibers (or other suitable particles such as flakes or their mixtures) together at their junctions or to the electrode layers themselves to better accommodate any changes in the size of the electrode(s) during cycling. In some examples (e.g., when the membrane is prepared from a dispersion), polymer binders may be added to small ceramic (e.g., oxide) fiber (or flakes or other particle types) dispersion in the amount of about 0.001-0.01 wt. % (relative to the total mass of the oxide fibers or other oxide particles and solvent) loadings. In other examples binders are added to small fiber dispersions in about 0.01 - 0.1 wt. % loadings (relative to the total mass of the oxide fibers or other oxide particles and solvent) and in yet other examples, the binders may be added to the dispersions in about 0.1-50 wt. % loadings (relative to the total mass of the oxide fibers or other oxide particles and solvent). The relative fraction of the small ceramic (e.g., oxide) fibers in the polymer-ceramic composite membranes may range rather broadly, from around 5 wt. % to around 99.9 wt. %. In some designs, the polymer component may also help to achieve uniform distribution of the ceramic particles in the membrane layer. In some designs, the polymer component may form primary (chemical) bonds with ceramic particles. In other designs, the polymer component may form secondary (e.g., hydrogen or van der Waals) bonds with ceramic particles. In some designs, both primary and secondary bonds between the polymer component and ceramic particles may exist.

In some examples (depending on a particular application, synthesis method and desired properties), a polymer component in the composite polymer-small ceramic fiber (or polymer-small ceramic flake or, more generally, polymer-ceramic) membranes may comprise thermoset or thermoplastic polymers (either standalone or as a mixture or as a co-polymer component), including but not limited to: various polysaccharides and mixture of polysaccharides with other polymers including but not limited to proteins (e.g., arabinoxylans, gum arabic, xantham gum, pectins, chitin and chitin derivatives, cellulose and cellulose derivatives including various modified natural polymers, such as cellulose acetate (CA), cellulose acetate butyrate (CBA), carboxymethylcellulose (CMC), cellulose nitrate (CN), ethyl cellulose (EC), among others cellulose derivatives, alginates including alginic acids and its salts, etc.); acrylonitrile-butadienestyrene (ABS); allyl resin (Allyl); casein (CS); cresol-formaldehyde (CF); chlorinated polyethylene (CPE); chlorinated polyvinyl chloride (CPVC); various epoxies (polyepoxides) (including fluorinated epoxies); epichlorhydrin copolymers (ECO); ethylene-propylene-diene terpolymer (EPDM); ethylene-propylene copolymer (EPM); ethylene vinyl acetate copolymer (EVA); ethylene vinyl alcohol (E/VAL); various fluoropolymers (such as polytetrafluoroethylene (PTFE), polytetrafluoroethylene (PCTFE), perfluoroalkoxy polymer (PFA / MFA), fluorinated ethylene-propylene (FEP), tetrafluoroethylene, hexafluoropropylene, vinylidene fluoride and their co-polymers (e.g., THV), polyethylenetetrafluoroethylene (ETFE), polyethylenechlorotrifluoroethylene (ECTFE), various perfluorinated elastomers (FFPM/FFKM), various fluorocarbons including chlorotrifluoroethylenevinylidene fluoride (FPM / FKM), tetrafluoroethylene-propylene (FEPM), perfluoropolyether (PFPE), perfluorosulfonic acid (PFSA), perfluoropolyoxetane, polyvinylfluoride (PVF), polyvinylidene fluoride (PVDF), various fluorosilicone rubbers (vinyl, methyl, etc.), among others); various ionomer - thermoplastic polymers; isobutene-isoprene copolymer (IIR); various liquid crystal polymers (LCP); melamine formaldehyde (MF); natural rubber (NR); phenol-formaldehyde plastic (PF); polyoxymethylene (POM); polyacrylate (ACM); polyacrylic acid (PAA); polyacrylic amide, polyacrylonitrile (PAN); various polyamides (PA) (including various aromatic polyamides often called aramids or polyaramids); polyaryletherketone (PAEK); polybutadiene (PBD); polybutylene (PB); polybutylene teraphtalate (PBTP); polycarbonate (PC); polychloromethyloxirane (epichlorhydrin polymer) (CO); polychloroprene (CR); polydicyclopentadiene (PDCP); polyester (in the form of either thermoplastic or thermoset polycondensate); polyetheretherketone (PEEK); polyetherimide (PEI); polyethersulfone (PES); polyethylene (PE); polyethylenechlorinates (PEC); polyethylene teraphtalate (PET); poly(3,4-ethylenedioxythiophene) polystyrene sulfonate (PEDOT:PSS); phenol-formaldehyde (PF); polyimide (PI) (as thermoplastic or thermoset polycondensate); polyisobutylene (PIB); polymethyl methacrylate (PMMA); polymethylpentene (PMP); polyoxymethylene (POM); polyketone (PK); polymethylpentene (PMP); polyethylene oxide (PEO); polyphenylene Oxide (PPO); polyphenylene sulfide (PPS); polyphthalamide (PTA); polypropylene (PP); propylene oxide copolymer (GPO); polystyrene (PS); polysulfone (PSU); polyester urethane (AU); polyether urethane (PUR); polyvinylalcohol (PVA); polyvinylacetate (PVAc); polyvinyl butyral (PVB); polyvinylchloride (PVC); polyvinyl formal (PVF); polyvinylidene chloride (PVDC); styrene-acrylonitrile copolymer (SAN); styrene-butadiene copolymers (SBR and YSBR); various silicones (SI) (such as polydimethylsiloxanes, polymethylhydrosiloxane, hexamethyldisiloxane, Sylgard^{®}, various silicone elastomers ((phenyl, methyl) (PMQ), (phenyl, vinyl, methyl) (PMVQ), (vinyl, methyl) (VMQ), etc.); polyisoprene; urea-formaldehyde (UF), among others. In some designs, some of such polymers may be at least partially fluorinated.

In some designs, polymers and co-polymers of the composite polymer-small ceramic fiber membranes may comprise at least one of the following monomer constituents: acrylates and modified acrylates (methylacrylate, methylmethacrylate, etc.), diallylphthalates, dianhydrides, amines, alcohols, anhydrides, epoxies, dipodals, imides (polyimides), furans, melamines, parylenes, phenol-formaldehydes, polyesters, urea-formaldehydes, urethanes, acetals, amides, butylene terephthalates, carbonates, ether ketones, ethylenes, phenylene sulfides, propylenes, styrene, sulfones, vinyl, vinyl butyrals, vinyl chlorides, butylenes, chlorobutyls, fluorobutyls, bromobutyls, epichlorohydrins, fluorocarbons, isoprenes, neoprenes, nitriles, sulfides, silicones, among others.

In some designs, silane coupling agents may be used to produce robust bonds between polymer and ceramic (e.g., oxide) interfaces. These molecules may be able to link typically unreactive surfaces as they have both a functional organic group and a functional silane group (R-Si-X3 where R is an organic ligand and X is typically alkoxy, acyloxy, halogen, or amine). These groups may covalently bond or physically interact with the polymer and inorganic (ceramic, such as oxide) surfaces. Three main example structures of silane coupling agents include trialkoxysilane, monoalkoxysilane, dipodal silane. Bonding may proceed through hydrolysis of the silane group, creating hydroxy functional groups. Independent silane monomers then able to polymerize through condensation reactions. The hydroxy groups bound to the silicon may then able to hydrogen bond to the hydroxy bonds of the inorganic substrate, followed by a covalent linkage using oxygen as a bridge to the siloxane polymer. The organofunctional group that is also connected to siloxane polymers may acts as a site for organic molecules to bind chemically (e.g., covalently) or through secondary bonds / physical interactions (e.g. van der Waals, ionic interaction, hydrogen bonding, etc.). Anhydrous bonding may also be possible wherein monomer silane groups covalently bond via an oxane bond to the inorganic substrate. Monomer addition to the substrate may be able to produce monolayer thin films of silane coupling agent. Silane coupling agents may be used with polymers both by treating the finished polymer or by including the silane coupling agent as a copolymer. Silane coupling agents may be used to modify resins through compounding or coating, or for treatment surfaces of fillers or ceramic particles.

In some designs, silane coupling agents may be used to provide more robust linking of inorganic (e.g., ceramic) to organic (e.g., polymer) components in the composite separator layer materials. Composite separator layers that include silane coupling agents may have increased mechanical stability, better thermal stability, higher ionic conductivity, and other enhanced properties. A wider range of polymer materials may also be available to use with normally incompatible (or not bonding) ceramics with the help of silane coupling agents. In one example implementation, ceramic materials (e.g., ceramic fibers or flakes) are functionally modified using the silane coupling agent. Both hydrolysis (typically trialkoxysilane, dialkoxysilane) or anhydrous (monoalkoxysilane) covalent bonding may be used depending on the ceramic, precursor, and/or water-sensitivity of surrounding materials. This may be done using anhydrous liquid phase deposition (in one example, using a reflux substrate with about 5% silane coupling agent in toluene, tetrahydrofuran, and/or hydrocarbon solution), aqueous alcohol deposition (in one example, using about 2% silane in about 95% EtOH / about 5% H₂O adjusted to a mixture with a pH of about 5), aqueous deposition (in one example, using about 0.5-2.0% silane, about 0.1 % nonionic surfactant, adjusted to pH of about 5.5), dip-coating (in one example, by submerging ceramic samples in a 2% silane solution for around 1-2 minutes), spray deposition (in one example, by spraying ceramic powder or membrane with 25% silane solution), or vapor phase deposition (in one example, at about 5-50 Torr from around 50 °C to around 200 °C). Dipodal silanes may be used to increase the hydrolytic stability of ceramic-polymer matrixes. Alternatively, silane coupling agents may be introduced as a monomer constituent of a copolymer to improve mechanical strength, thermal stability, and bonding ability. Some examples of silane coupling agents that may be used to cross-link ceramic composite materials include but are not limited to: acrylate, methacrylate, aldehyde, amino, anhydride, azide, carboxylate, phosphonate, sulfonate, epoxy, ester, halogen, hydroxyl, isocyanate, masked isocyanate, phosphine, phosphate, sulfur, vinyl, olefin, polymeric, UV active, fluorescent, chiral, trihydro, dipodal, among other functional silanes.

In some designs, it may be advantageous for the composite membranes to utilize thermally stable polymers that maintain at least 50% of their room-temperature tensile strength at elevated temperatures in the range from about 120.0 °C to about 450.0 °C in either an inert environment or in air (in some designs it may be preferred for such thermal stability temperature to exceed 150 °C or even 200 °C). In some designs, such polymers may advantageously comprise nitrogen (N) and/or fluorine (F) in their atomic composition. In some designs, the atomic fraction of either N or F or both (N+F) may range from around 5 at. % to around 70 at. %. Illustrative examples of such polymers include, but are not limited to viton (chemical structure (C₃F₆)ₙ(C₂H₂F₂)ₘ) and various polyimides (particularly semi-aromatic and aromatic polyimides) (e.g., polyimide (III) of pyromellitic anhydride and p,p'-diaminodiphenyl ether, poly-oxydiphenylene-pyromellitimide, among many others). In some designs, it may be advantageous to utilize polyimides with side chains or functionalizing polyimides to bond with the small ceramic fibers.

In some designs, it may be advantageous to expose the composite polymer-small particles (e.g., small ceramic fibers, small ceramic flakes, etc.) membrane to an ultraviolet (UV) light at near-room temperatures in compatible atmospheres that does not degrade polymer properties (in some cases simply in air or in an oxygen containing environment) to cure/cross-link the polymer and enhance mechanical properties of the membrane.

**In** some designs, a metal salt or salt mixture (e.g., either inorganic or organic or mixed) may be added to the suspension (dispersion) of small alkoxide or oxide fibers (e.g., flakes or other suitable particles or particle mixtures) either prior to forming a separator membrane or infiltrated into the membrane after its pre-formation and drying. Such a salt or salt mixture may comprise various anions (e.g., F⁻, Cl⁻, Br⁻, I⁻, NO₃⁻, SO₄⁻, CO₃²⁻, C₂O₄²⁻ , ClO₄⁻, BF₄⁻, PF₆⁻ as well as the hydrated forms of these and other compounds). Examples of suitable organic anions in suitable salts may include (but are not limited to) acetate and substituted acetates, 2-ethylhexanoate and substituted carboxcylic acids, cyclopentadienide, substituted cyclopentadienide, cyclooctadienide and substituted cyclooctadienide, trifenylphosphine and substituted trifenylphonephine, acetylacetonate and substituted acetylacetonates, diketimines and substituted diketimines, bipyridene and substituted bipyridene, Bis[1-N,N-dimethylamino)-2-propanolato (DMAP), acetonitrile dihalides, carbonyl and substituted carbonyls, cyclohexanes and substituted cyclohexanes, stearates and substituted stearates, porphyrins and substituted porphyrins, formates, acetates and alkyl acetates. Examples of cations (or their mixtures) in suitable salts include, but are not limited to Al³⁺, Li⁺, Na⁺, Mg²⁺, Ca²⁺, Cr³⁺, Cr⁴⁺, Cr⁵⁺, Cr⁶⁺ , K⁺, Zr⁴⁺, Zn²⁺, Sr²⁺, Ti⁴⁺, Sc³⁺, Fe ²⁺, Fe³⁺, Cu²⁺, among others. In some designs, Rb⁺, Co²⁺ Co³⁺, Ni²⁺, Mn⁺, Mn²⁺, Mn³⁺, Mn⁴⁺, Mn⁵⁺, Mn⁶⁺, Mn⁷⁺, Ta³⁺, Ta⁴⁺, Ta⁵⁺, Si⁴⁺, Ge⁴⁺, La³⁺, V⁵⁺, V³⁺, Cs⁺, Ba²⁺, Sr²⁺ and others may also be utilized.

Such a salt or salt mixture may be dissolved in a compatible solvent prior to its addition. These metal salts may then be transformed into oxides by exposure to UV light and bond neighboring particles (e.g., small fibers or flakes, etc.) to form a robust yet flexible separator layer (e.g., a standalone separator membrane or a separator coating). In some examples, metal alkoxides such as Ga(OR)₃, Ti(OR)₄, Zr(OR)₄, V(OR)₅, Ni(OR)₂, CuOR, Zn(OR)₂, LiOR, NaOR, KOR, Mg(OR)₂, Ca(OR)₂ and others may be added to the dispersion of ceramic (e.g., oxide) small fibers and other particles for conversion into an oxide by exposure to UV light and oxygen containing atmosphere (such as ambient atmosphere).The low temperature of this process makes it particularly attractive as it minimizes thermal stresses and makes it compatible with thermally sensitive substrates (e.g., makes it very attractive for the formation of separator layer as a coating on the surface of electrodes or separator).

In some designs, siloxane may be used as a bonding additive, which may be converted to SiO₂. For example, O₂ may be converted to O³⁻ with 185 nm UV light, then O³⁻ may photo-dissociate under exposure to 254 nm UV light to form molecular oxygen and atomic oxygen. Atomic oxygen may then react with siloxane (or metal alkoxides) to form SiO₂ (or metal oxides). In other designs, an SiO₂ bonding agent may be formed by the vapor-phase chemisorption of organosilane and subsequent photooxidation using 172-nm vacuum ultraviolet (VUV) light.

In some designs, small organometallic fibers (e.g., small alkoxide fibers) (or flakes or other suitable particles) or small hydroxide fibers (or flakes or other suitable particles) may be transformed into oxide fibers (or flakes or other suitable particles) by exposure to UV light or ozone. In some designs, such a UV light exposure may induce bonding of randomly (or oriented) fibers (or flakes) to other neighboring fibers (or flakes) to produce a robust and flexible oxide membrane. In some designs, such small organometallic (or hydroxide) fibers (or flakes) may be mixed with oxide or other ceramic fibers (small or large) or flake-shaped particles (small or large) prior to UV exposure. In some designs, the fiber (or flake) dispersion (with or without additional salts) may be coated onto a substrate prior to UV exposure. In some designs, the fiber (or flake) coating may be dried prior to UV exposure. In some designs, the fiber (or flake) coating may be densified (e.g., by applying mechanical pressure, by, e.g., calendaring) prior to UV exposure. In some designs, the fiber (or flake) coating may be heated (e.g., to a temperature in a range from about +30 °C to around 500 °C or more) prior to UV exposure.

In some designs, the UV exposure may take place at elevated temperatures. In some designs, such an elevated temperature may range from around +30 °C to around 1200 °C.

**In** some designs, the use of extra-thin (e.g., less than about 5-10 µm) and highly porous (e.g., porosity greater than about 75 % total porosity) aluminum oxide (or other suitable oxide and suitable ceramic) membranes may allow for noticeably increased rate capability and energy density of Li and Li-ion batteries as well as that of other batteries, while increasing or maintaining a required level of safety. This level of porosity, beneficial for high rate capabilities, in combination with mechanical integrity and flexibility may be attainable using small fiber-like or flake-like structures. However, 'regular' (e.g., near-spherical) particle-based ceramic structures by contrast require substantially denser packing to produce a mechanical network and are typically not very flexible. Due to their high stability at high potentials, such membranes may be used in combination with high voltage cathodes (e.g., cathodes having an average lithiation potential from around 3.9 to around 5.6 V vs. Li/Li+) in Li and Li-ion battery cells.

As described above, in addition to using the standalone (e.g., porous aluminum oxide) separator membrane, small fibers or flakes (e.g., made of aluminum oxide or porous aluminum oxide) may be directly deposited on at least one of the electrodes (or on another membrane) by using casting (e.g., slot-die casting or blade casting) or by spray deposition or by field-assisted deposition or by dip coating, or by another suitable method. In some designs, such deposited fibers may serve as an integrated (thin and flexible) membrane separating anodes and cathodes from direct electrical contact, while providing small resistance to ion transport and occupying a relatively small space. In an example where the separator is produced by casting or spray drying from a dispersion, the separator may be dried (after casting / spray drying) at temperatures in the range from around 40 °C to around 400 °C.

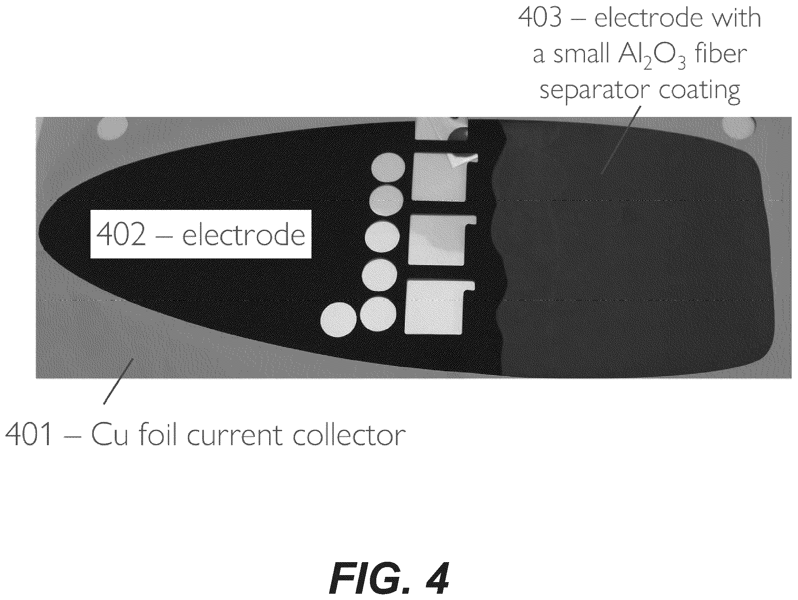

FIG. 4. Illustrates an example of a small Al₂O₃ fiber coating 403 on an electrode to produce a separator layer as a coating on a Si-based Li-ion battery anode 402 coated on a Cu foil 401.

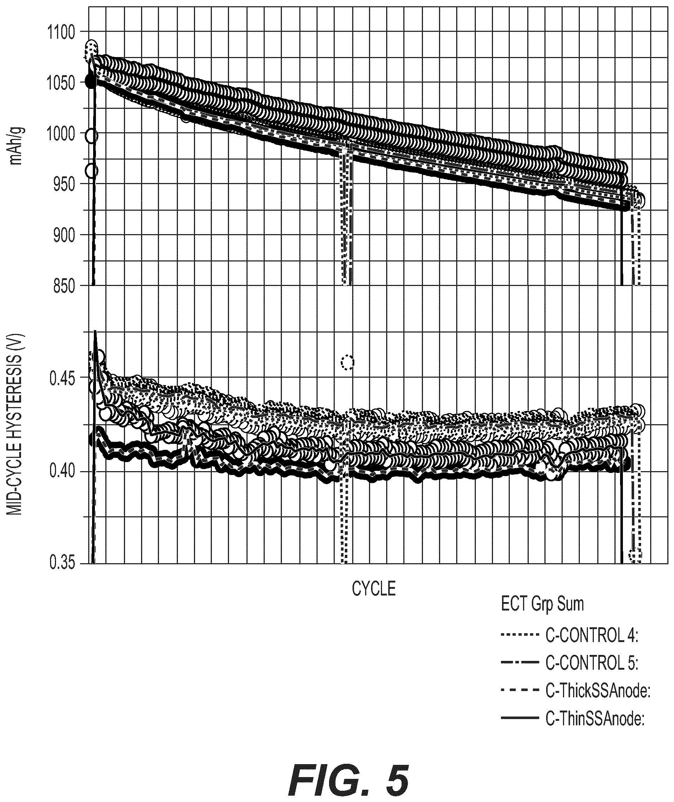

FIG. 5 illustrates a comparison of select performance characteristics of four full cells with a high voltage lithium cobalt oxide (LCO) cathode and a Si-based Li-ion battery anode built either with small Al₂O₃ fiber separator of two thicknesses coated directly on the Si anode (thickSSAnode and thinSSAnode) vs. a conventional commercial polymer (PP) separator (control 4 and control 5). All tested cells were built with identical anodes and cathodes. Capacity (mAh/g) is normalized by the weight of the anode coating. Mid-cycle hysteresis (V) was recorded when cells were cycled at C/2 rate. The smaller hysteresis of the cells with the small Al₂O₃ fiber separator layer coating is clearly visible in FIG. 5.

In addition to Al₂O₃ separator layers (e.g., coatings or standalone membranes), other ceramic separator layers (including those produced from or comprising small fibers or small flakes, including porous small fibers and flakes) may be utilized as separators in Li-ion and other batteries. These include MgO, ZrO₂, various mixed oxides and many others. The important parameters in some designs are generally mechanical properties, stability of the ceramic membrane in electrolyte and (in case of the direct contact with positive or negative electrodes) the lack of the electrochemical side reactions (such as significant lithiation or dissolution, in contact with electrodes).

In some applications, it may be advantageous to deposit a porous polymer layer on one or both sides of the standalone ceramic (Al₂O₃, MgO, ZrO₂, etc.) separator membrane in order to further reduce small side reactions with electrodes. For example, when such membranes are used in Li or Li-ion (or Na or Na-ion or other metal or metal-ion) batteries, depositing such a porous polymer layer (e.g., porous ethylene, porous propylene, porous aramid, porous cellulose, porous saccharide, etc. - other examples of suitable polymers are provided above) on the anode side of the membrane may reduce or prevent undesirable side reactions (e.g., lithiation, electrochemical reduction, etc.) between the anode and the ceramic separator. Similarly, formation of such a porous polymer layer on the cathode side of the membrane may reduce potential undesirable oxidation reactions. In some designs, a suitable thickness of such a porous polymer layer may range from around 10 nm to around 10 micron. In some applications of Li and Li-ion (or other metal or metal-ion batteries), it may be advantageous to deposit a thin (e.g., from about 1 nm to about 200 nm), mostly nonporous (dense) polymer layer on the inner surface of the membrane (e.g., around individual wires) to prevent a direct Li contact with the ceramic wires (e.g., in case of a Li dendrite formation). In some designs, it is further preferable for such a polymer layer to be stable in contact with Li and exhibit high interfacial energy at the polymer/Li interface. In this case, formation of the Li dendrite would result in a substantial increase in the energy of the system and its growth may be significantly reduced or eliminated. In contrast, a direct contact of Li with many ceramic materials may result in the formation of the low-energy interface, which would reduce the surface energy of the Li dendrite and thus undesirably favor its propagation.

In some applications, it may be advantageous for the porous polymer layer on one or both sides of the ceramic (e.g., Al₂O₃, MgO, ZrO₂, etc.) membrane to be thermally responsive (or comprise a thermally responsive layer) and close pores above certain temperature. This may provide an additional safety feature of the cell because above a certain temperature (e.g., selected in the range from about 70 °C to about 120 °C, for some applications) the membrane would shut the current flow. In some designs, a thermally responsive layer may comprise a thermoplastic that melts above a critical temperature (e.g., selected in the range from about 70 °C to about 120 °C, for typical applications) to cut off the Li ion conduction.

In some applications, the use of oxide (e.g., aluminum oxide, magnesium oxide, zirconium oxide, etc.) or other suitable ceramic small fiber or flake (including but not limited to porous small fiber or flake) separator layers (e.g., standalone separator membranes or a separator coatings) (particularly in combination with the discussed above polymer coatings) in metal anode-based battery cells in medium sized (e.g., from around 10 mAh to around 200 mAh), large (e.g., from around 200 mAh to around 10,000 mAh), or extra-large (e.g., above around 10,000 mAh) cells may be particularly advantageous (e.g., due to enhanced safety particularly important for medium or large or extra-large cells). Example of suitable metal anode-based battery cells include, but are not limited to, cells with Li anode (e.g., as in Li metal batteries), Mg anode (e.g., as in Mg metal batteries), Na anode (e.g., as in Li metal batteries), Zn anode (many battery chemistries comprising Zn or Zn alloy anodes and electrolytes that do not induce dissolution or reduction of small wire membranes), K anode (e.g., as in K metal batteries), to name a few. In some designs, rechargeable metal anode batteries may particularly benefit from this membrane technology. Metal anodes in such rechargeable battery cells may undergo metal stripping (dissolution into electrolyte as ions) during discharging and re-plating during charging. This process may lead to the formation of dendrites that may induce internal shorting, which may lead to battery failure (and, in some case, to various safety risks such as fires, particularly known in Li battery chemistries). The use of solid electrolytes or surface layer protection with a solid ceramic protective layer is often expensive, not always feasible, and does not always protect the cell from dendrite penetration (particularly in situations where the battery may be shocked or exposed to various stresses, as when used in transportation). While it is common in some battery research for a majority of scientists to utilize so-called half cells with metal anodes (e.g., Li half cells) in order to evaluate the performance of their electrode materials or separators (typically in very small coin cells having a capacity below about 10 mAh), the use of metal anodes in commercial cells (particularly in rechargeable cells with liquid aqueous and organic electrolytes) is rare because of their higher cost as well as reliability and safety concerns (larger sized cells would release more energy during dendrite-induced thermal runaway and rapid disassembling, particularly when flammable organic electrolytes are utilized). The use of small fiber or flake separator layers (e.g., separator membranes or separator coatings) as described herein (e.g., porous aluminum oxide or magnesium oxide or zirconium oxide membranes, to provide a few examples) with a relatively high elastic modulus of the membrane material, high porosity, and (potentially importantly) small (e.g., below about 2 microns, more preferably below about 0.25 microns, on average) and tortuous pores may greatly suppress or eliminate the dendrite growth, while providing relatively fast metal (e.g., Li, Mg, Zn, etc.) deposition (plating) and thus high power density. While metal dendrites may penetrate through many polymer membranes in some applications (e.g., during metal dendrite growth in a cell with a polymer separator membrane), the metal dendrites may fail to penetrate through individual small oxide fibers (e.g., small aluminum oxide fibers) even if these are coated with polymer layers. Therefore, in some applications, metal dendrite formation may require dendrites to grow around the small fibers, which may significantly increase the dendrite specific surface area. The small features of the membrane walls, its roughness, its dielectric properties, or its surface properties may also be responsible for the suppression of dendrite growth.

In some designs, medium or large or extra-large cells with other (non- metal) anodes (e.g., Si-based or graphite-based) may also greatly benefit from using porous, ceramic (e.g., flexible) small fiber (including but not limited to porous small fiber) or small flake separator layers (e.g., separator membranes or separator coatings) in their construction due to greatly enhanced safety, higher compressive strength, reduced ionic resistance, better thermal stability or other positive attributes.

In some applications, the use of ionically permeable (e.g., porous) polymer layer between the oxide (e.g., aluminum oxide, magnesium oxide, zirconium oxide, etc.) small fiber or flake (including but not limited to porous small fiber or flake) comprising membranes and at least one of the electrodes may be beneficial for their use as separators in electrochemical cells (e.g., battery cells). In some designs, such a polymer layer may be deposited on a membrane or on an electrode or simply sandwiched between the ceramic membrane and at least one of the electrodes. In some designs, such a polymer layer may serve different useful functions. In one example, it may reduce stress concentration at the interface between an electrode and the porous oxide separator (e.g., because polymers are typically softer and more deformable compared to oxides). This may lead to enhanced reliability during cell assembling when the cell stack is pressurized and to a more reliable cell operation. In another example, such a polymer layer may make the oxide separator easier to handle (e.g., during cell assembling or oxide membrane production). In yet another example, such a polymer layer may enhance adhesion between the oxide membrane and an electrode (e.g., essentially serving as a gluing / adhesive layer). In yet another example, such a polymer layer may enhance electrochemical stability of the oxide membrane. As previously described, for example, in the case of Li or Li-ion batteries the use of a polymer layer between an oxide membrane and an anode may reduce or prevent reduction of the oxide by Li or other unfavorable interactions at low potentials (e.g., below around 0.1-2 V vs. Li/Li+, depending on an oxide and electrolyte chemistry). In this case, not only aluminum, magnesium and zirconium oxides, but also many other oxides that are typically unstable or significantly less stable in contact with Li may be utilized (e.g., silicon oxides, zinc oxides, iron oxides, magnesium oxides, cadmium oxides, copper oxides, chromium oxides, titanium oxide, various combination of oxides, etc.). If a polymer layer is placed between an oxide membrane and a cathode, it may prevent or minimize various undesirable interactions between an oxide and electrolyte or a cathode at higher potentials (e.g., above around 3-4 V vs. Li/Li+, depending on the oxide and electrolyte chemistry). In yet another example, such a polymer layer may serve as an additional safety mechanism. For example, it may prevent ion transport (e.g., by closing the pores or by becoming impermeable by the electrolyte solvent or by other mechanisms) if heated above a critical temperature (or cooled below a critical temperature). In some designs, the suitable porosity of such a polymer layer may range from around 0 to around 99 vol. % (more preferably, from around 10 to around 90 vol. %). In some designs the suitable thickness of such a polymer layer may range from around 5 nm to around 20 microns (more preferably, from around 10 nm to around 10 microns). In some designs, thicknesses smaller than around 5 nm may reduce the usefulness of such a polymer layer, while thickness larger than around 20 microns may undesirably increase the total separator stack thickness and may also induce harmful effects (e.g., polymer shrinking during heating may also damage an oxide membrane). In some designs, the polymer layer may be a part of a multi-layer (oxide fiber or oxide flake - comprising) membrane or may be deposited on at least one of the electrodes or be prepared as a stand-alone film. The composition of the polymer layer may depend on a particular functionality desirable and a particular chemistry of an electrochemical cell and may be selected from the list of polymer compositions discussed in conjunction with the polymer composites described herein.

In some applications, the use of oxide (e.g., aluminum oxide, magnesium oxide, zirconium oxide, etc.) or other suitable ceramic small fibers or flakes (including but not limited to porous small fibers and porous small flakes) as thermally stable, electrically isolative mechanical reinforcement in electrodes, solid (e.g., polymer, ceramic, glass-ceramic, or composite) electrolyte and separators of various batteries (e.g., Li and Li-ion batteries, Na and Na-ion batteries, etc.) and other electrochemical energy storage devices may also be highly advantageous. In some designs, small fibers may enhance mechanical strength, fatigue resistance, and overall durability of the electrodes without providing undesirable electrochemically active surface area for decomposition of electrolyte due to the lack of electrical conductivity in aluminum oxide and other oxides, in contrast to, for example, carbon nanotubes or carbon fibers and nanofibers. In addition, the use of oxide (e.g., aluminum oxide, magnesium oxide, etc.) or other suitable ceramic small fibers may be advantageous for providing (and maintaining during cycling) fast ionic pathways within electrodes. For example, pores in the porous oxide (e.g., aluminum oxide or magnesium oxide, etc.) small fibers may be utilized as pathways for ion access from the top surface to the bulk of the electrode. Since these pores may remain filled with electrolyte but empty from electrolyte decomposition products and since mechanical strength of the oxide may be sufficiently large to withstand volume changes in the electrodes during operation without inducing collapse of the pores, in some designs such pores may be successfully utilized for maintaining high ionic conductivity within the electrode during cycling.

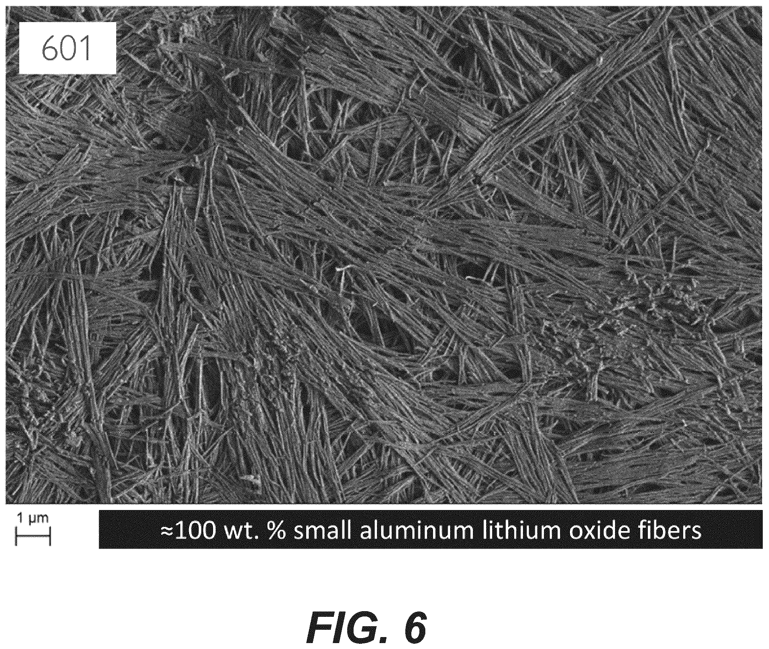

FIG. 6 illustrates an example of a small oxide fiber coating 601 comprising small aluminum lithium oxide fibers produced from small aluminum ethoxide fibers that comprise lithium impurities. Such small aluminum ethoxide fibers were, in turn, produced by the exposure of Li-Al alloy particles to dry ethanol.

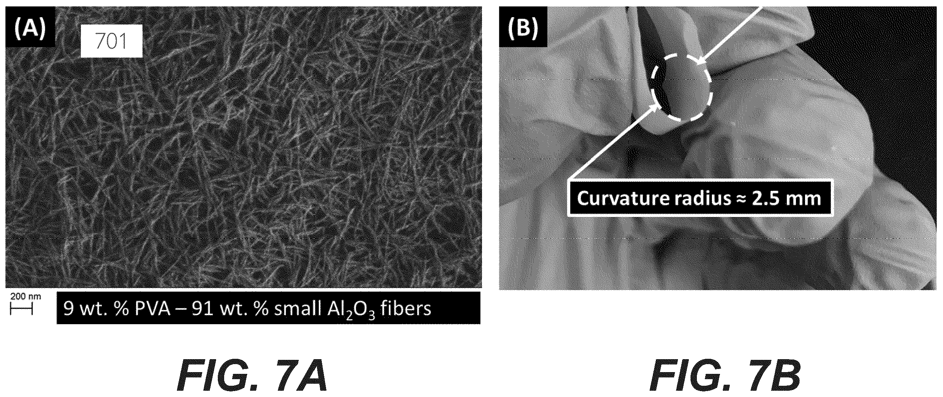

FIG. 7A illustrates an example of a composite membrane 701 produced by casting from a colloidal solution comprising both small oxide fibers (Al₂O₃ in this example) and a polymer (PVA, with average molecular weight (MW) of about 30,000). The PVA was dissolved in ethanol solvent and oxide fibers were suspended in such a solution. The weight ratio of about 91:9 (oxide:polymer) was used in this example. The image depicted in FIG. 7A was recorded using scanning electron microscopy (SEM). FIG. 7B illustrates an example curvature radius of the composite membrane 701 of FIG. 7A, whereby a small curvature radius of ≈ 2.5 mm is achieved without breaking. In some designs, the MW of polymers may vary in a broad range, with the optimal MW being dependent upon the polymer composition, solvent used, polymer solubility in a solvent, polymer fraction and/or other parameters. In some designs, a suitable MW may range from around 500 to around 5,000,000.

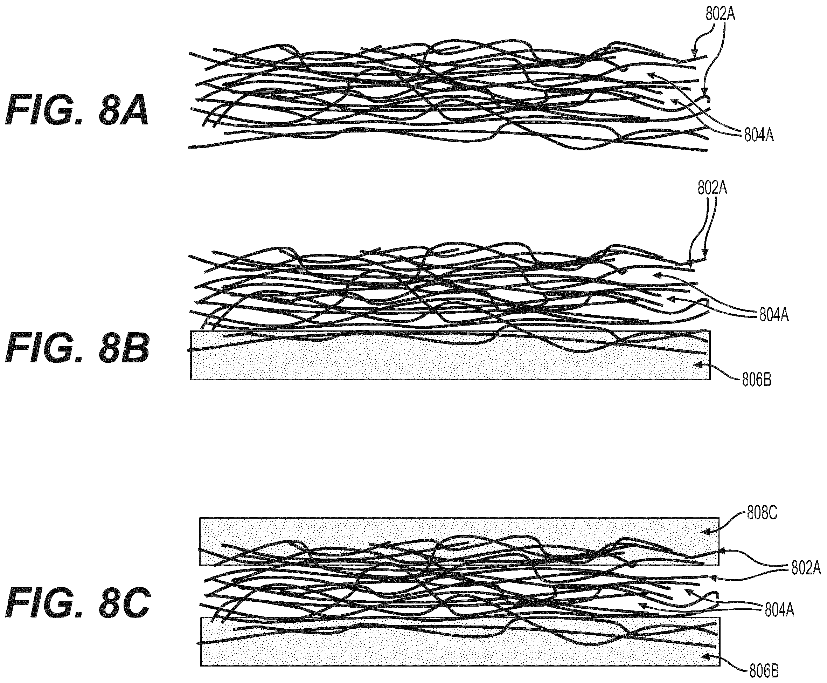

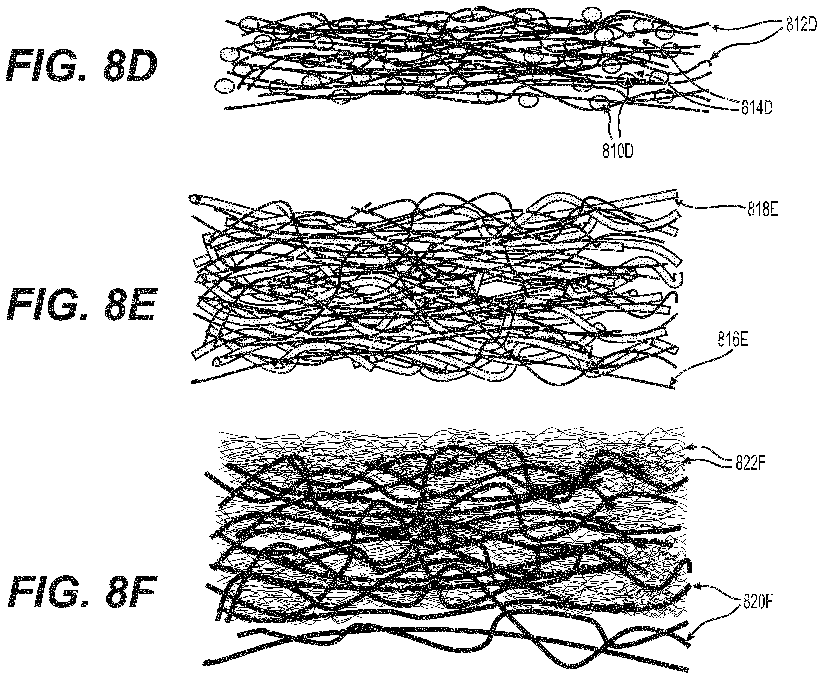

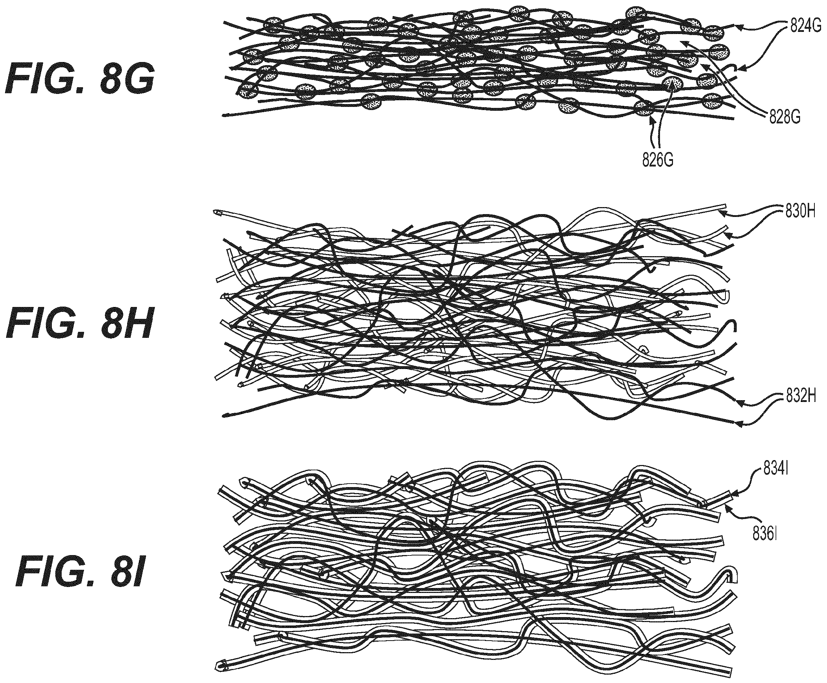

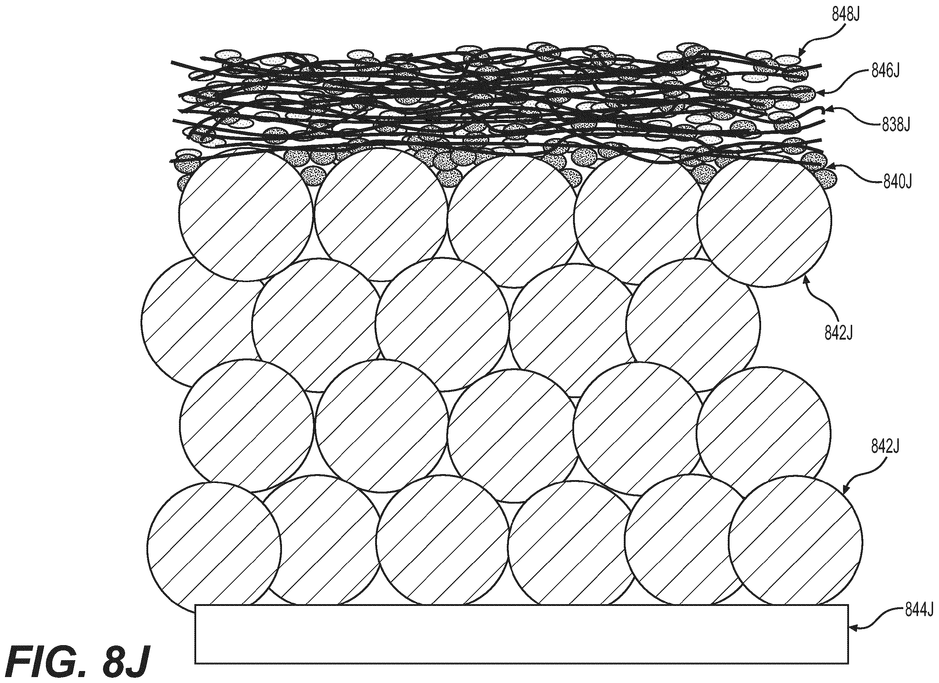

FIGS. 8A-8J illustrate several example schematics of various composite membranes comprising small ceramic particles and produced according to different exemplary embodiments. FIG. 8A illustrates the simplest case of a 100% ceramic separator membrane comprising small fibers 802A with intervening pores 804A; FIG. 8B illustrates a ceramic membrane that includes the small fibers and pores depicted in FIG. 8A while further containing a porous polymer coating 806B on one side; FIG. 8C illustrates a ceramic membrane that includes the small fibers, pores and polymer coating 806B while further including another polymer coating 808C on the other side of the ceramic membrane; FIG. 8D illustrates a ceramic-polymer composite membrane with polymer 810D present in the bulk of the membrane (e.g., as a binder) among small fibers 812D with intervening pores 814D; FIG. 8E illustrates a ceramic-polymer composite membrane that comprises small ceramic fibers (or flakes) 818E and polymer fibers (or flakes) 818E; FIG. 8E illustrates a ceramic membrane comprising fibers of substantially different diameters and lengths (e.g., long and thick fibers 820F and short and thin fibers 822F); FIG. 8G illustrates a ceramic membrane comprising fiber-shaped particles 824G and non-fiber shaped particles 826G (e.g., flakes with aspect ratio >4, irregular shaped particles with aspect ratio < 2, etc.) with intervening pores 828G; FIG. 8H illustrates a ceramic-ceramic composite membrane comprising two or more types (830H and 832H) of fibers of distinct morphology and/or composition or microstructure; FIG. 8I illustrates a ceramic composite membrane comprising small fibers 834I that comprise a coating shell 836I on their surface (e.g., made of a polymer or another ceramic layer); FIG. 8J illustrates a ceramic-polymer composite separation membrane layer comprising small ceramic (e.g., oxide) fibers 838J, low aspect ratio ceramic (e.g., oxide) particles 840J filling gaps between electrode particles 842J (which is in turn electrically connected to an electrode current collector 844J), low aspect ratio ceramic (e.g., oxide) particles 846J arranged between the fibers 838J, and a polymer binder 848J, the ceramic-polymer composite separation membrane layer being coated directly on to the electrode surface (e.g., onto a Si-containing anode or other suitable anode or cathode).

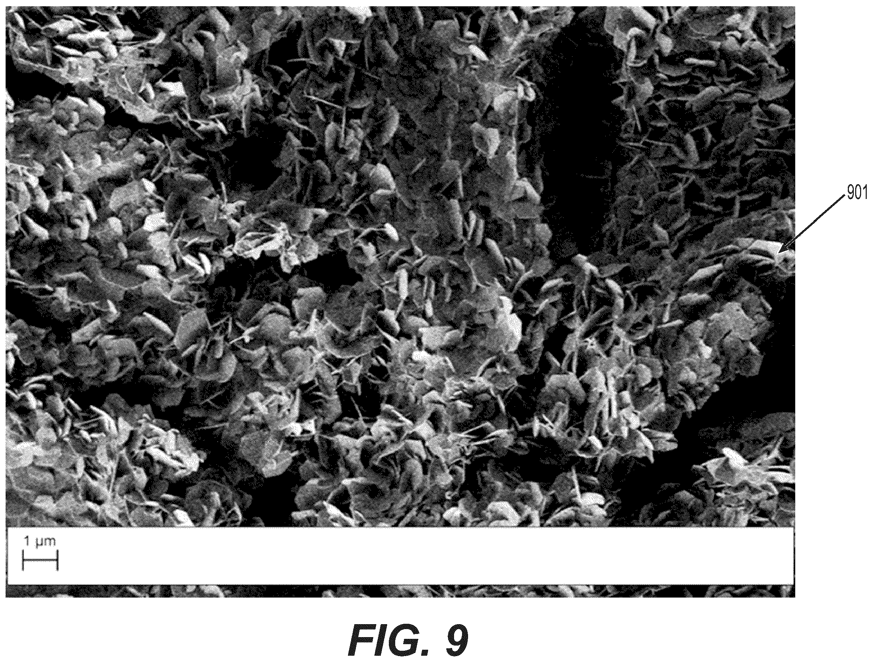

FIG. 9 illustrate example ceramic platelets 901 that may be used in a separator layer coating according to some embodiments of the disclosure. The ceramic platelets 901 shown in FIG. 9 represent one example of a flake-shaped configuration for the ceramic-comprising component (e.g., small metal oxide flakes (or platelets) formed from Al₂O₃ in this example) of the ceramic-comprising separator layer. In an example, flake-type (or platelet-type) small ceramic particles such as those depicted in FIG. 9 may be synthesized by various techniques, including but not limited to exfoliation (or partial etching) of layered materials, by various vapor deposition techniques (e.g., by chemical vapor deposition, etc.), by various solution synthesis techniques (e.g., Sol-gel, hydrothermal, solvothermal, heating reaction solutions comprising metal salts, metal alkoxides, metal silicates or other suitable metal comprising precursors, etc.), among others. In a further example, catalysts or capping agents or surfactants may be used in the synthesis of flake-type (or platelet-type) small ceramic (e.g., such as those depicted in FIG. 9) in some designs.

In addition to the use of the described above separation membranes comprising small ceramic (e.g., oxide, such as aluminum oxide, aluminum lithium oxide, aluminum magnesium oxide, aluminum magnesium lithium oxide, magnesium oxide, magnesium lithium oxide, etc.) fibers in energy storage applications (e.g., in Li-ion and other batteries or in supercapacitors), their use in air purification applications (e.g., in HEPA filtration) may also be very attractive and highly advantageous. For example, the high porosity of such membranes (e.g., about 40-80 vol. %) may allow low resistance to air flow and thus processing (purifying) larger volume of air per unit membrane area. In a further example, the small size of pores between the small fibers may allow effective exclusion (filtration) of sub-micron particles. In some designs, due to high polarity of oxide fibers (the presence of high dipole moments on their surface), such materials additionally adsorb smaller (than membrane pore size) particles due to strong electrostatic interactions between the small fiber surfaces and small particles, which allows for more effective filtration (compared to that of the polymer HEPA filter membranes). In some designs, the high mechanical strength of ceramic fibers and abrasion resistance increases the lifetime of the ceramic membranes. Furthermore, in some designs, many of the filtered particles could be burned in air (or plasma) at temperatures below that of the all-ceramic membrane stability. As such, ceramic membranes based on small fibers could be easily cleaned without significant damage. In contrast, certain fiber glass or polymer fiber - based HEPA filters suffer from inferior thermal stability and cannot be purified by such means. Better thermal stability of the ceramic filters compared to polymers may also allow for the effective use of ceramic small fiber-based membrane filters and long-term stability in hot climates or in applications where temperature could be rather high (e.g., in vehicle filters, in various factories, etc.). In contrast, small polymer HEPA filters often degrade rapidly if exposed to elevated temperatures for prolonged times. Similarly, many polymer membranes lose their strength and ductility when exposed to low temperatures. As such, they may degrade in cold climates. In contrast, ceramic small fiber-based membrane filters may not reduce their mechanical properties significantly even when cooled to below about minus (-) 70 °C.

**In** some designs, the use of small ceramic (e.g., oxide) fibers (particularly porous fibers) may also be highly advantageous as their pores (or external surfaces) could be easily loaded with durable metal or metal oxide-based catalysts (e.g., titanium oxide, copper, copper oxide, iron oxide, iron-copper oxide, copper oxychloride, iron oxychloride, iron-copper oxychloride, etc.) - for example, in the form of nanoparticles or coatings. Such catalysts not only may help to degrade organic contaminants, but also to effectively kill bacteria, bacteria spores and viruses. The deposition of such nanoparticles could be done via solution-based infiltration of the precursor salts followed by their oxidation (in case of forming oxide nanoparticles) or reduction (in case of forming metal nanoparticles). The high surface area of the small fibers (particularly small porous fibers) may allow for high loading of catalyst(s) without significant reduction of the membrane mechanical properties.

Similarly, it may be advantageous to use the above-described separation membranes comprising small ceramic (e.g., oxide, such as aluminum oxide, aluminum lithium oxide, aluminum magnesium oxide, aluminum magnesium lithium oxide, magnesium oxide, magnesium lithium oxide, etc.) fibers (including porous ones and the ones loaded with catalysts and antibacterial agents) for water purification applications, particularly when the achieved average pore size is rather small (e.g., about 0.02-0.6 microns). In some designs, such membranes could be made highly durable and highly effective in removing bacteria and various toxic particles from water (e.g., for forming drinking water or water sufficiently safe to washing hands, face or body or food (e.g., fruits, berries, vegetables, etc.) or dishes). In some designs, such membranes may be incorporated into a straw to allow direct drinking from water reserves (e.g., lakes and rivers) that may potentially be contaminated with various harmful bacteria or viruses. Similar, such membranes may be incorporated into various water vessels (e.g., for producing drinking water, etc.).

This description is provided to enable any person skilled in the art to make or use embodiments of the present invention. It will be appreciated, however, that the present disclosure is not limited to the particular formulations, process steps, and materials disclosed herein, as various modifications to these embodiments will be readily apparent to those skilled in the art. That is, the generic principles defined herein may be applied to other embodiments without departing from the spirit or scope of the disclosure. For example, the described synthesis of flexible ceramic membranes may be used in various composites or separator membrane applications in addition to the described use in energy storage and conversion devices.

### OTHER ASPECTS

**In** first broad independent aspect, a separator comprises: a ceramic-comprising separator layer, wherein the ceramic-comprising separator layer comprises porous metal oxide fibers with diameters in the range from around 3 nm to around 2 microns, aspect ratios in the range from around 20 to around 100,000, and a total open pore volume among the metal oxide fibers in the range from around 0.01 cm3/g to around 1 cm3/g.

**In** a subsidiary aspect in accordance with the first broad aspect, the ceramic-comprising separator layer is implemented as a coating on one or more of an anode electrode, an cathode electrode, or a separator membrane of the separator, or wherein the ceramic-comprising separator layer is implemented as a standalone separator membrane.

In a subsidiary aspect in accordance with the first broad aspect, the metal oxide fibers comprise from around 2 at. % to around 40 at. % of aluminum (Al).

In a subsidiary aspect in accordance with the first broad aspect, the metal oxide fibers exhibit amorphous or nanocrystalline microstructure with an average grain size below around 20 nm.

In a subsidiary aspect in accordance with the first broad aspect, the individual metal oxide fibers exhibit an average tensile strength in the range from around 100 MPa to around 50 GPa.

In a subsidiary aspect in accordance with the first broad aspect, the metal oxide fibers are bonded to each other, and wherein an average bond strength between the metal oxide fibers ranges from around 1% to over around 100% of an average tensile strength of the metal oxide fibers.

In a subsidiary aspect in accordance with the first broad aspect, the separator exhibits tensile strength in the range from around 1 MPa to around 1,000 MPa.

In a subsidiary aspect in accordance with the first broad aspect, the separator exhibits a minimum bending radius in the range from around 0.1 mm to around 3 cm.

In a subsidiary aspect in accordance with the first broad aspect, a thickness of the separator is in the range from around 1 micron to around 30 micron.

In a subsidiary aspect in accordance with the first broad aspect, a porosity of the separator ranges from around 30.0 vol. % to around 85.0 vol. %.

**In** a subsidiary aspect in accordance with the first broad aspect, the metal oxide fibers comprise first and second subsets of fibers having respective average diameters that vary by at least 10 times.

In a subsidiary aspect in accordance with the first broad aspect, the metal oxide fibers comprise first and second subsets of fibers having respective average lengths that vary by at least 10 times.

In a subsidiary aspect in accordance with the first broad aspect, at least 20 wt. % of the metal oxide fibers exhibit diameters in the range from around 20 nm to around 200 nm.

In a subsidiary aspect in accordance with the first broad aspect, at least 20 wt. % of the metal oxide fibers exhibit length in the range from around 2 micron to around 200 micron.

In a subsidiary aspect in accordance with the first broad aspect, the metal oxide fibers include a first subset of fibers with a first composition and/or morphology and a second subset of fibers with a second composition and/or morphology that is different from the first composition and/or morphology.

In a subsidiary aspect in accordance with the first broad aspect, the metal oxide fibers are produced by conversion of alkoxide precursor fibers.

In a subsidiary aspect in accordance with the first broad aspect, the separator is produced by casting or spray drying from a dispersion, followed by drying at temperatures in the range from around 40 °C to around 400 °C.

In a subsidiary aspect in accordance with the first broad aspect, the separator separates an anode electrode from a cathode electrode, and wherein the anode electrode comprises from around 3 wt.% to around 70 wt. % of Silicon (Si).

In a subsidiary aspect in accordance with the first broad aspect, the separator comprises polymer in the range from around 0.5 wt. % to around 50 wt. %.

In a subsidiary aspect in accordance with the first broad aspect, the polymer exhibits thermal stability in the range from around 120.0 °C to around 450.0 °C, the heating to which does not reduce its room temperature tensile strength by more than around 50%.

## Claims

1. A method of making a battery cell assembly comprising a first electrode, a second electrode, and a separator, the method comprising:
(A1) providing a dispersion comprising metal oxide, metal hydroxide or metal oxyhydroxide particles and a solvent composition;
(A2) coating the dispersion directly on a roll of the first electrode to form a first layer of the separator on the first electrode;
(A3) providing the second electrode; and
(A4) assembling the first electrode and the second electrode with the separator between the first electrode and the second electrode;
wherein:
a thickness of the separator ranges between about 0.5 µm to about 10 µm;
the metal oxide, the metal hydroxide, or the metal oxyhydroxide particles comprise (1) a first set of the metal oxide, the metal hydroxide, or the metal oxyhydroxide particles with a first aspect ratio distribution, and (2) a second set of the metal oxide, the metal hydroxide, or the metal oxyhydroxide particles with a second aspect ratio distribution;
the metal oxide, the metal hydroxide, or the metal oxyhydroxide particles of the first set are fiber-shaped and are **characterized by** diameters in a diameter range from around 3 nm to around 2 µm and aspect ratios in an aspect ratio range from around 4 to around 1,000,000; and
the metal oxide, the metal hydroxide, or the metal oxyhydroxide particles of the second set are flakes.

2. The method of claim 1, wherein:
the aspect ratio range is from around 20 to around 100,000, or
the aspect ratio range is from around 4 to around 10, or
an average aspect ratio of the second aspect ratio distribution is smaller than an average aspect ratio of the first aspect ratio distribution, or
the metal oxide, the metal hydroxide, or the metal oxyhydroxide particles of the second set do not take up more than around 50.0 wt. % of the first layer, or
the metal oxide, the metal hydroxide, or the metal oxyhydroxide particles comprise from around 2 at. % to around 40 at. % of aluminum (Al), or
at least some of the metal oxide, the metal hydroxide, or the metal oxyhydroxide particles are bundled, or
a total pore volume among the metal oxide, the metal hydroxide, or the metal oxyhydroxide particles is in a range of about 0.01 cm³/g to about 1 cm³/g.

3. The method of claim 1, wherein:
the (A3) comprises coating the dispersion directly on a roll of the second electrode to form a second layer of the separator, or
the separator does not comprise any standalone separator layer, or
the separator additionally comprises a polymer in a range of about 0.1 to about 50 wt. %, or
a porosity of the separator is in a range of about 25 vol. % to about 80 vol. %, or
the coating of the dispersion is carried out by spray coating, slot die coating, gravure coating, dip coating, roller coating, and/or knife-edge coating, or
the separator exhibits a minimum bending radius in a range from around 0.1 mm to around 3 cm, or
the separator exhibits a tensile strength in a range from around 1 MPa to around 1000 MPa, or
the separator exhibits a pore exclusion size in a range from about 10 nm to about 1 µm.

4. The method of claim 3, wherein:
the polymer comprises a thermoplastic that melts in a range of about 70 to about 120 °C, or
the polymer comprises a polymer binder.

5. The method of claim 1, wherein:
the first electrode is an anode electrode; and
the anode electrode comprises from around 3 wt.% to around 70 wt. % of silicon (Si).

6. The method of claim 1, wherein:
the solvent composition comprises one or more of the following: water, alcohol, glycol, glycol ether, ether, N-Methyl-2-pyrrolidone (NMP), dimethylformamide (DMF), methyl ethyl ketone (MEK), hexamethylphosphoramide, cyclopentanone, acetonitrile, tetramethylene sulfoxide, and ε-caprolactone.

7. The method of claim 1, additionally comprising:
depositing a functional surface coating on the metal oxide, the metal hydroxide, or the metal oxyhydroxide particles, exhibiting a surface layer thickness in a range from about 0.3 nm to about 30 nm, the functional surface coating comprising a polymer, carbon, dielectric, and/or different ceramic material, or
making the metal oxide, the metal hydroxide, or the metal oxyhydroxide particles by conversion of alkoxide precursor particles.

8. The method of claim 1, additionally comprising:
heat-treating at least the first layer in a temperature range of about 40 °C to about 200 °C.

9. A battery cell assembly, comprising:
a first electrode;
a second electrode; and
a separator between the first electrode and the second electrode;
wherein:
the separator comprises a first layer comprising metal oxide, metal hydroxide, or metal oxyhydroxide particles, the first layer being directly deposited on the first electrode;
a thickness of the separator ranges between about 0.5 µm to about 10 µm;
the metal oxide, the metal hydroxide, or the metal oxyhydroxide particles comprise a (1) a first set of the metal oxide, the metal hydroxide, or the metal oxyhydroxide particles with a first aspect ratio distribution, and (2) a second set of the metal oxide, the metal hydroxide, or the metal oxyhydroxide particles with a second aspect ratio distribution;
the metal oxide, the metal hydroxide, or the metal oxyhydroxide particles of the first set are fiber-shaped and are **characterized by** diameters in a diameter range from around 3 nm to around 2 µm and aspect ratios in an aspect ratio range from around 4 to around 1,000,000; and
the metal oxide, the metal hydroxide, or the metal oxyhydroxide particles of the second set are flakes.

10. The battery cell assembly of claim 9, wherein:
the aspect ratio range is from around 20 to around 100,000, or
the aspect ratio range is from around 4 to around 10, or
an average aspect ratio of the second aspect ratio distribution is smaller than an average aspect ratio of the first aspect ratio distribution, or
the metal oxide, the metal hydroxide, or the metal oxyhydroxide particles of the second set do not take up more than around 50.0 wt. % of the first layer, or
the metal oxide, the metal hydroxide, or the metal oxyhydroxide particles comprise from around 2 at. % to around 40 at. % of aluminum (Al), or
at least some of the metal oxide, the metal hydroxide, or the metal oxyhydroxide particles are bundled, or
a total pore volume among the metal oxide, the metal hydroxide, or the metal oxyhydroxide particles is in a range of about 0.01 cm³/g to about 1 cm³/g.

11. The battery cell assembly of claim 9, wherein:
the separator comprises a second layer comprising the metal oxide, the metal hydroxide, or the metal oxyhydroxide particles, the second layer being deposited on the first layer, or
the separator does not comprise any standalone separator layer, or
the separator additionally comprises a polymer in a range of about 0.1 to about 50 wt. %, or
a porosity of the separator is in a range of about 25 vol. % to about 80 vol. %, or
the separator exhibits a minimum bending radius in a range from around 0.1 mm to around 3 cm, or
the separator exhibits a tensile strength in a range from around 1 MPa to around 1000 MPa, or
the separator exhibits a pore exclusion size in a range from about 10 nm to about 1 µm.

12. The battery cell assembly of claim 11, wherein:
the polymer comprises a thermoplastic that melts in a range of about 70 to about 120 °C, or
the polymer comprises a polymer binder.

13. The battery cell assembly of claim 9, wherein:
the first electrode is an anode electrode; and
the anode electrode comprises from around 3 wt.% to around 70 wt. % of silicon (Si).

14. The battery cell assembly of claim 9, wherein:
the metal oxide, the metal hydroxide, or the metal oxyhydroxide particles comprise a functional surface coating, exhibiting a surface layer thickness in a range from about 0.3 nm to about 30 nm, the functional surface coating comprising a polymer, carbon, dielectric, and/or ceramic material.

15. A battery cell comprising:
the battery cell assembly of claim 9; and
an electrolyte;
wherein
the electrolyte is infiltrated into the separator of the battery cell assembly.
